# EUROPEAN PATENT APPLICATION

(11) **EP 4 714 766 A1**
(43) Date of publication of application: **25.03.2026**
(21) Application number: 23941094.7
(22) Date of filing: 16.06.2023
(51) Int. Cl.: B60W 30/09

(54) **INTELLIGENT DRIVING METHOD AND APPARATUS**

(71) Applicant: Shenzhen Yinwang Intelligent Technologies Co., Ltd., Shenzhen, Guangdong 518110 (CN)
(72) Inventor: SU, Peng, Shenzhen, Guangdong 518129 (CN); LI, Shiyong, Shenzhen, Guangdong 518129 (CN); HUANG, Qingqiu, Shenzhen, Guangdong 518129 (CN); XU, Chunjing, Shenzhen, Guangdong 518129 (CN); YE, Chaoqiang, Shenzhen, Guangdong 518129 (CN); DONG, Siyuan, Shenzhen, Guangdong 518129 (CN)
(74) Representative: Maiwald GmbH
(86) International application number: PCT/CN2023/100778
(87) International publication number: WO 2024/254861

(57) **Abstract**

An intelligent driving method and an apparatus are disclosed. The method includes: obtaining collected data of a sensor of a vehicle for a scene, where the sensor includes at least one of a camera and a radar; inputting the collected data into a perception detection network, and outputting perception information, where the perception information indicates a voxel of an obstacle in a first scene; and controlling driving of the vehicle based on at least the perception information. This can enhance a perception capability of the vehicle for surroundings, help improve obstacle detection accuracy, and avoid a collision.

## Description

### TECHNICAL FIELD

This application relates to the intelligent driving field, and in particular, to an intelligent driving method and an apparatus.

### BACKGROUND

A perception capability of a perception system of an automated vehicle for surroundings is closely related to safe driving of the vehicle.

Currently, there is a perception system of a vehicle that detects an obstacle in surroundings in a pure vision manner. This manner has high dependency on a training material (for example, a trustlist), and the perception system can identify the obstacle only after training and learning of the obstacle.

Currently, there is also a perception system of a vehicle that detects an obstacle in surroundings by using a lidar or a millimeter-wave radar. However, detection in this manner is easily affected by weather, for example, accuracy of detecting an obstacle in this manner in rainy or snowy weather is low.

### SUMMARY

This application discloses an intelligent driving method and an apparatus, to enhance a perception capability of a vehicle for a surrounding object, help improve obstacle detection accuracy, and avoid a collision.

According to a first aspect, this application provides an intelligent driving method. The method includes: obtaining collected data of a sensor for a first scene, where the sensor includes at least one of a camera and a radar; inputting the collected data into a perception detection network, and outputting perception information, where the perception information indicates a voxel of an obstacle in the first scene; and controlling driving of a vehicle based on at least the perception information.

Herein, the obstacle is an entity that is not expected to collide with the vehicle in a driving process. The entity may be static or dynamic. The static entity may be a static object having a volume and mass, for example, a carton on a road, a road construction sign, a road boundary rail, a pile of soil, a tire, a vehicle that is turned over, a lying person, an animal, a road side building, a tree, a parked vehicle, a road sign, a utility pole, a road side isolation belt, or the like. The dynamic entity may be a moving object having a volume and mass, for example, a pedestrian (like a walking pedestrian or a bicycle rider), an animal, a vehicle, a vehicle carrying goods (for example, carrying a carton, a tree branch, or other goods), or the like.

It may be understood that a presentation form of the obstacle in the physical world is not limited in this application. For example, the obstacle is a vehicle, where the presentation form of the vehicle may be a form in which tires are on the ground when the vehicle is driving or stopped, or may be a form in which the vehicle is turned over after a collision accident, or may be a form in which a rear trunk of the vehicle carries goods (for example, a tree branch or a carton), or may be a form in which a plurality of vehicles are connected. A type of a vehicle when the obstacle is the vehicle is not limited herein. The type of the vehicle may be, for example, a car, a truck, a bus, a trailer, a non-complete vehicle, a motorcycle, or a bicycle.

Herein, the radar includes at least one of a lidar or a millimeter-wave radar.

For example, the first scene may be understood as an environment space that can be detected by the sensor on the vehicle in the driving process of the vehicle. It may be understood that in the driving process of the vehicle, each moment may correspond to one scene, and scenes corresponding to a plurality of moments include a scene corresponding to each of the plurality of moments.

For example, the perception detection network is obtained through training based on a sensor data set and label information that corresponds to the sensor data set and that is generated through 4D reconstruction (namely, spatiotemporal reconstruction including dynamic and static targets). The label information is used to provide truth value information of a prediction result of the perception detection network for the perception detection network in a training process of the perception detection network. It may be understood that 4D reconstruction may describe a change of an entity object in three-dimensional space in a time dimension.

For example, in addition to controlling the driving of the vehicle based on the perception information, the driving of the vehicle may be further controlled based on at least one of navigation map information, high definition map information, live traffic information broadcast by a road side device and another surrounding vehicle, and the like.

For example, the method may be applied to a vehicle or a component (for example, a chip or an integrated circuit) used for intelligent driving control in the vehicle. The vehicle is configured with an automated driving system. Herein, the automated driving system is not limited to a fully automated driving system, a highly automated driving system, a conditionally automated driving system, a partially automated driving system, or the like. A person skilled in the art may understand that all non-fully manual driving systems for intelligent driving may be covered within this concept.

In the foregoing method, data of a scene is collected in a pure vision manner or in a vision and radar combination manner, and the data of the scene is processed by using the perception detection network to output perception information that indicates a voxel of an obstacle. This can enhance a perception capability of the vehicle for a surrounding object, implement perception on the obstacle unrelated to a semantic category, and improve a generalization capability and accuracy of detecting the obstacle in the scene. In addition, the controlling the driving of the vehicle based on the perception information can improve the driving safety of the vehicle.

In a possible implementation of the first aspect, the method further includes: displaying the obstacle based on the perception information, where the obstacle is marked by a polygon box; and/or displaying the voxel of the obstacle based on the perception information, where the voxel of the obstacle is marked by the polygon box.

For example, the polygon box may be two-dimensional or three-dimensional.

For example, during displaying of the obstacle or the voxel of the obstacle, a dynamic obstacle and a static obstacle at a current moment may be distinguished by using different colors, or a dynamic obstacle and a static obstacle may be distinguished by additionally displaying an arrow on the dynamic obstacle, where the arrow on the dynamic obstacle indicates a movement direction of the dynamic obstacle.

In the foregoing implementation, the obstacle is marked by the polygon box that is more closely attached to a shape of the obstacle. By presenting the obstacle and/or the voxel of the obstacle, the user can clearly and intuitively learn of a perception status of the vehicle for surroundings at a current moment.

In a possible implementation of the first aspect, the perception information includes at least one of the following information: an occupation status of a voxel of the first scene, speed information of the voxel of the first scene, a visibility status of the voxel of the first scene, and corner point information of the polygon box corresponding to the obstacle, where the polygon box corresponding to the obstacle is associated with the voxel of the obstacle.

Herein, the visibility status of the voxel may be classified into, for example, "visible" and "invisible". For example, in a scene in which the vehicle is located at a current moment, if a specific voxel of the scene is not sensed by an observation signal of any sensor (including the camera and the radar) on the vehicle at the current moment, a visibility status of this voxel is invisible; and if this voxel is sensed by an observation signal of at least one sensor on the vehicle, the visibility status of the voxel is visible.

Herein, the occupation status of the voxel may be classified into, for example, "occupied" or "empty" (that is, not occupied). For example, in a scene in which the vehicle is located at a current moment, if a physical entity exists at a spatial location that corresponds to a specific voxel of the scene and that is in a physical world in which the scene is located, an occupation status of this voxel is occupied; and if no physical entity exists at the spatial location that corresponds to this voxel and that is in the physical world in which the scene is located, the occupation status of this voxel is empty. It may be understood that air is not a physical entity.

For example, that the polygon box corresponding to the obstacle is associated with the voxel of the obstacle may be understood as that the corner point information of the polygon box corresponding to the obstacle is obtained based on index information of the voxel of the obstacle. The corner point information of the polygon box corresponding to the obstacle may be, for example, obtained through calculation by using a convex hull algorithm based on the index information of the voxel of the obstacle.

In the foregoing implementations, a blind spot of the vehicle in a current scene may be known based on the visibility status of the voxel; it is may be known based on the occupation status of the voxel that the vehicle in the current scene needs to avoid an area in which a voxel in an "occupied" state is located, to avoid a collision; the obstacle in the scene may be quickly located based on the corner point information of the polygon box corresponding to the obstacle; and speed information of the obstacle in the current scene may be determined based on the speed information of the voxel and the corner point information of the polygon box corresponding to the obstacle.

In a possible implementation of the first aspect, the perception information further indicates a voxel of a road surface in the first scene, and the controlling driving of a vehicle based on at least the perception information includes: generating road surface geometry information of the first scene based on at least the perception information; and adjusting a suspension in the vehicle based on the road surface geometry information.

For example, the road surface geometry information indicates a status of the road surface (for example, whether the road surface has a pit or a bump) in the first scene.

In the foregoing implementation, the vehicle may obtain the status of the road surface in front of the vehicle in advance based on the perception information. When it is detected that the road surface in front fluctuates, the vehicle has sufficient time to adjust the suspension of the vehicle in a timely manner, so that the vehicle keeps a horizontal and stable state as far as possible in the driving process, to reduce vibration caused by the fluctuation of the road surface, and improve comfort of taking the vehicle.

In a possible implementation of the first aspect, the controlling driving of a vehicle based on at least the perception information includes: adjusting a driving path of the vehicle based on at least the perception information, where an adjusted driving path does not pass through an area in which the voxel of the obstacle is located.

In the foregoing implementation, the vehicle can be prevented from colliding with the obstacle in the driving process, to help improve driving safety of the vehicle.

In a possible implementation of the first aspect, the collected data includes image data and point cloud data, and the perception detection network includes an image feature extraction network, a point cloud feature extraction network, a feature fusion network, and an output network.

The image feature extraction network is configured to extract the 3D image feature of the image data.

The point cloud feature extraction network is configured to extract a point cloud feature of a voxel corresponding to the point cloud data.

The feature fusion network is configured to perform fusion based on the 3D image feature and the point cloud feature of the voxel corresponding to the point cloud data, to obtain a fusion feature of the voxel of the first scene.

The output network is configured to process the fusion feature of the voxel of the first scene and output the perception information.

Herein, different from the voxel corresponding to the point cloud data, in this application, the voxel of the first scene is a voxel obtained through fusion by the feature fusion network.

In the foregoing implementation, original data of a multi-modal sensor on the vehicle is used to perceive the obstacle in the surroundings, and advantages of different sensors are integrated (for example, texture semantic information of an image is provided, and depth information of a point cloud is provided). This helps enhance the perception capability of the vehicle for the surroundings, and improves the generalization capability and accuracy of detecting the obstacle.

In a possible implementation of the first aspect, the method further includes: inputting text query information and a fusion feature of the voxel of the obstacle into an attribute recognition network, and outputting category information of the obstacle, where the text query information is used to request to query a category; and displaying the category information of the obstacle, where the fusion feature of the voxel of the obstacle is determined based on the corner point information of the polygon box corresponding to the obstacle and the fusion feature of the voxel of the first scene, and the polygon box corresponding to the obstacle is associated with the voxel of the obstacle.

For example, the text query information is used to request to query Q categories. It is assumed that a quantity of categories of obstacles in a scene is P, where Q and P are positive integers, and Q is greater than P. That is, a quantity of categories that are actually supported by the attribute recognition network for recognition is greater than categories of obstacles in any scene. In this way, it can be ensured that omission can be avoided when the attribute recognition network performs category recognition on the obstacles in any scene.

For example, that the fusion feature of the voxel of the obstacle is determined based on the corner point information of the polygon box corresponding to the obstacle and the fusion feature of the voxel of the first scene means that the corner point information of the polygon box corresponding to the obstacle corresponds to the index information of the voxel of the obstacle, and therefore, the fusion feature of the voxel of the obstacle may be determined from the fusion feature of the voxel of the first scene based on the index information of the voxel of the obstacle.

Herein, that the polygon box corresponding to the obstacle is associated with the voxel of the obstacle means that the corner point information of the polygon box corresponding to the obstacle is obtained based on the index information of the voxel of the obstacle.

For example, the attribute recognition includes a text encoding network and an attribute decoding network. The text encoding network is configured to extract a word vector feature of the text query information, and the attribute decoding network is configured to output the category information of the obstacle based on the word vector feature and the fusion feature of the voxel of the obstacle.

In the foregoing implementation, based on the perception detection network, the attribute recognition network is deployed, so that the vehicle cannot only detect an obstacle in the surroundings, but also recognize a category of the obstacle in the driving process, thereby implementing that the vehicle cannot only see an object but also understand the object.

In a possible implementation of the first aspect, the method further includes: obtaining a plurality of planned paths of the vehicle; inputting the plurality of planned paths of the vehicle and the fusion feature of the voxel of the first scene into a path evaluation network, and outputting recommendation coefficients of the plurality of planned paths and a recommended path in the plurality of planned paths, where the recommended path is associated with the recommendation coefficients of the plurality of planned paths; and displaying the recommended path.

For example, the path evaluation network includes a path encoding network, a feature interaction network, and an evaluation output network. The path encoding network is configured to extract a path feature of each of the plurality of planned paths. The feature interaction network is configured to obtain a risk feature of each planned path based on the path feature of each planned path and the fusion feature of the voxel of the first scene. The evaluation output network is configured to output the recommendation coefficients of the plurality of planned paths and the recommended path in the plurality of planned paths based on the risk features of the plurality of planned paths.

For example, the recommended path is a planned path corresponding to a highest recommendation coefficient in the plurality of planned paths.

For example, a recommendation coefficient of a planned path may be obtained based on at least one of a risk coefficient, comfort, and traffic efficiency of the planned path. The risk coefficient of the planned path is related to at least one of factors such as a distance between the planned path and an obstacle (including a visible obstacle and an obstacle that is currently in a blind spot), and whether the planned path collides with a path of another traffic participant on a road (for example, whether a collision occurs at a current moment or a future moment). The traffic efficiency of the planned path is related to at least one of factors such as a length of the planned path, estimated traffic duration corresponding to the planned path, a quantity of traffic lights on the planned path, and an area of a drivable area in which the planned path is located. The comfort of the planned path is related to at least one of factors such as a value of a steering acceleration and a steering frequency of the planned path, a change rate of an acceleration of the planned path, flatness of a road surface of the planned path, a quantity of traffic lights of the planned path, a type of the road on which the planned path is located, and whether a path area of the planned path is cool.

For example, when another factor remains unchanged, a lower risk coefficient of the planned path indicates a higher recommendation coefficient of the planned path. When another factor remains unchanged, higher comfort of the planned path indicates a higher recommendation coefficient of the planned path. When another factor remains unchanged, higher traffic efficiency of the planned path indicates a higher recommendation coefficient of the planned path.

In the foregoing implementation, based on the perception detection network, the attribute recognition network may be deployed to implement path recommendation, which helps improve driving safety and comfort of the vehicle.

According to a second aspect, this application provides a system for intelligent driving. The system includes: a perception detection network, configured to output perception information based on collected data of a sensor for a first scene, where the perception information indicates a voxel of an obstacle in the first scene, and the sensor includes at least one of a camera and a radar; an attribute recognition network, configured to output category information of the obstacle based on text query information and a fusion feature of the voxel of the obstacle, where the fusion feature of the voxel of the obstacle is determined based on corner point information of a polygon box corresponding to the obstacle and a fusion feature of a voxel of the first scene, the polygon box corresponding to the obstacle is associated with the voxel of the obstacle, and the fusion feature of the voxel of the first scene is obtained by the perception detection network by performing temporal and/or spatial fusion based on at least one of a 3D image feature and a point cloud feature of a voxel that are extracted from the collected data; and a path evaluation network, configured to output recommendation coefficients of a plurality of planned paths and a recommended path in the plurality of planned paths based on the plurality of planned paths and the fusion feature of the voxel of the first scene, where the recommended path is associated with the recommendation coefficients of the plurality of planned paths

For example, the system may be deployed in a vehicle or a component used for intelligent driving control in the vehicle, and the component may be, for example, a chip or an integrated circuit. For details about the vehicle, refer to the descriptions of the vehicle in the first aspect. Details are not described again.

In the foregoing method, the perception detection network may be used to enhance a perception capability of the system for intelligent driving for surroundings, so that a deployment end of the system can be prevented from colliding with the obstacle, to improve security of the system. The attribute recognition network is used to enable the system to further recognize a category of the obstacle based on perception of the obstacle, to improve intelligence of the system. The path evaluation network can be used to recommend a low-risk path, to facilitate intelligent travel.

For beneficial effects of any feature of the second aspect, refer to the descriptions of beneficial effects of corresponding features of the first aspect. Details are not described again.

In a possible implementation of the second aspect, the perception information includes at least one of the following information: an occupation status of the voxel of the first scene, speed information of the voxel of the first scene, a visibility status of the voxel of the first scene, and the corner point information of the polygon box corresponding to the obstacle, where the polygon box corresponding to the obstacle is associated with the voxel of the obstacle.

In a possible implementation of the second aspect, the collected data includes image data and point cloud data, and the perception detection network includes an image feature extraction network, a point cloud feature extraction network, a feature fusion network, and an output network.

The image feature extraction network is configured to extract the 3D image feature of the image data.

The point cloud feature extraction network is configured to extract the point cloud feature of the voxel corresponding to the point cloud data.

The feature fusion network is configured to perform fusion based on the 3D image feature and the point cloud feature of the voxel corresponding to the point cloud data, to obtain the fusion feature of the voxel of the first scene.

The output network is configured to process the fusion feature of the voxel of the first scene and output the perception information.

In a possible implementation of the second aspect, the attribute recognition network includes a text encoding network and an attribute decoding network, where the text encoding network is configured to extract a word vector feature of the text query information; and the attribute decoding network is configured to output the category information of the obstacle based on the word vector feature and the fusion feature of the voxel of the obstacle.

In a possible implementation of the second aspect, the path evaluation network includes a path encoding network, a feature interaction network, and an evaluation output network.

The path encoding network is configured to extract a path feature of each of the plurality of planned paths.

The feature interaction network is configured to obtain a risk feature of each planned path based on the path feature of each planned path and the fusion feature of the voxel of the first scene.

The evaluation output network is configured to output the recommendation coefficients of the plurality of planned paths and the recommended path in the plurality of planned paths based on the risk features of the plurality of planned paths.

According to a third aspect, this application provides an apparatus for intelligent driving. The apparatus includes: a receiving unit, configured to obtain collected data of a sensor for a first scene, where the sensor includes at least one of a camera and a radar; and a processing unit, configured to input the collected data into a perception detection network, and output perception information, where the perception information indicates a voxel of an obstacle in the first scene. The processing unit is further configured to control driving of a vehicle based on at least the perception information.

In a possible implementation of the third aspect, the apparatus further includes a display unit. The display unit is configured to display the obstacle based on the perception information, where the obstacle is marked by using a polygon box; and/or display the voxel of the obstacle based on the perception information.

In a possible implementation of the third aspect, the perception information includes at least one of the following information: an occupation status of a voxel of the first scene, speed information of the voxel of the first scene, a visibility status of the voxel of the first scene, and corner point information of the polygon box corresponding to the obstacle, where the polygon box corresponding to the obstacle is associated with the voxel of the obstacle.

In a possible implementation of the third aspect, the perception information further indicates a voxel of a road surface in the first scene, and the processing unit is specifically configured to generate road surface geometry information of the first scene based on at least the perception information; and adjust a suspension in the vehicle based on the road surface geometry information.

In a possible implementation of the third aspect, the processing unit is specifically configured to adjust a driving path of the vehicle based on at least the perception information, where an adjusted driving path does not pass through an area in which the voxel of the obstacle is located.

In a possible implementation of the third aspect, the collected data includes image data and point cloud data, and the perception detection network includes an image feature extraction network, a point cloud feature extraction network, a feature fusion network, and an output network.

The image feature extraction network is configured to extract the 3D image feature of the image data.

The point cloud feature extraction network is configured to extract a point cloud feature of a voxel corresponding to the point cloud data.

The feature fusion network is configured to perform fusion based on the 3D image feature and the point cloud feature of the voxel corresponding to the point cloud data, to obtain a fusion feature of the voxel of the first scene.

The output network is configured to process the fusion feature of the voxel of the first scene and output the perception information.

In a possible implementation of the third aspect, the processing unit is further configured to: input text query information and a fusion feature of the voxel of the obstacle into an attribute recognition network, and output category information of the obstacle, where the text query information is used to request to query a category; and the display unit is further configured to display the category information of the obstacle, where the fusion feature of the voxel of the obstacle is determined based on the corner point information of the polygon box corresponding to the obstacle and the fusion feature of the voxel of the first scene, and the polygon box corresponding to the obstacle is associated with the voxel of the obstacle.

In a possible implementation of the third aspect, the receiving unit is further configured to obtain a plurality of planned paths of the vehicle; the processing unit is further configured to: input the plurality of planned paths of the vehicle and the fusion feature of the voxel of the first scene into a path evaluation network, and output recommendation coefficients of the plurality of planned paths and a recommended path in the plurality of planned paths, where the recommended path is associated with the recommendation coefficients of the plurality of planned paths; and the display unit is further configured to display the recommended path.

According to a fourth aspect, this application provides an apparatus for intelligent driving. The apparatus includes a processor and a memory, where the memory is configured to store program instructions; and the processor invokes the program instructions in the memory, so that the apparatus performs the method according to any one of the first aspect or the possible implementations of the first aspect.

According to a fifth aspect, this application provides a vehicle. The vehicle includes the system according to any one of the second aspect or the possible implementations of the second aspect, or the apparatus according to any one of the third aspect or the possible implementations of the third aspect, or the apparatus according to the fourth aspect.

According to a sixth aspect, this application provides a computer-readable storage medium, including computer instructions. When the computer instructions are run by a processor, the method according to any one of the first aspect or the possible implementations of the first aspect is implemented.

According to a seventh aspect, this application provides a computer program product. When the computer program product is executed by a processor, the method according to any one of the first aspect or the possible embodiments of the first aspect is implemented. For example, the computer program product may be a software installation package. When the method provided in any possible design of the first aspect needs to be used, the computer program product may be downloaded and executed on the processor, to implement the method according to any one of the first aspect or the possible embodiments of the first aspect.

### BRIEF DESCRIPTION OF DRAWINGS

FIG. 1 is a diagram of a communication system according to an embodiment of this application;
FIG. 2 is a diagram of a system of a perception model for intelligent driving according to an embodiment of this application;
FIG. 3 is a diagram of feature extraction of a perception detection network according to an embodiment of this application;
FIG. 4 is a flowchart of an intelligent driving method according to an embodiment of this application;
FIG. 5 is a diagram of some scenes according to an embodiment of this application;
FIG. 6A is a diagram of making an obstacle in a scene by using a polygon box according to an embodiment of this application;
FIG. 6B is a diagram of displaying a voxel of an obstacle according to an embodiment of this application;
FIG. 6C is a diagram of displaying a voxel of a road surface in a scene according to an embodiment of this application;
FIG. 7A is a flowchart of a training method of a perception detection network according to an embodiment of this application;
FIG. 7B is a diagram of a training process of a perception detection network according to an embodiment of this application;
FIG. 8 is a diagram of a hardware structure of a chip according to an embodiment of this application;
FIG. 9A is a diagram of a structure of a computing apparatus according to an embodiment of this application;
FIG. 9B is a diagram of a structure of a training apparatus according to an embodiment of this application; and
FIG. 10 is a diagram of a structure of a processing device according to an embodiment of this application.

### DESCRIPTION OF EMBODIMENTS

It should be noted that the prefix words "first", "second", and the like in this application are merely intended to distinguish between different objects, and impose no limitation on locations, a sequence, priorities, quantities, content, or the like of the described objects. For example, if the described object is a "field", ordinal numbers before the "fields" in the "first field" and the "second field" do not limit positions or a sequence of the "fields". The "first" and the "second" do not limit the "fields" described by the "first" and the "second" to be or not to be in a same message, and do not limit a sequence of the "first field" and the "second field." For another example, if the described object is a "level", ordinal numbers before the "levels" in the "first level" and the "second level" do not limit priorities of the "levels ". For another example, a quantity of described objects is not limited by the prefix word, and there may be one or more described objects. The "first device" is used as an example, where there may be one or more "devices". In addition, objects described by different prefix words may be the same or different. For example, if the described object is a "device", the "first device" and the "second device" may be a same device, a same type of device, or different types of devices. For another example, if the described object is "information", the "first information" and the "second information" may be information of same content or information of different content. In conclusion, in embodiments of this application, the use of the prefix word used to distinguish between the described objects does not constitute a limitation on the described objects. For descriptions of the described objects, refer to descriptions of context in the claims or the embodiments. The use of the prefix word should not constitute an unnecessary limitation.

It should be noted that in embodiments of this application, a description manner, for example, "at least one item (or at least one) of a1, a2, ..., and an" is used, including a case in which any one of a1, a2, ..., and an exists independently, and also including a case in which any combination of a1, a2, ..., and an exists, where each case may exist independently. For example, a description manner of "at least one of a, b, and c" includes cases of a single a, a single b, a single c, a combination of a and b, a combination of a and c, a combination of b and c, or a combination of a, b, and c.

For ease of understanding, the following first describes related terms that may be used in embodiments of this application.

### (1) Automated driving

The automated driving may also be referred to as intelligent driving or assisted driving, and is an important direction of vehicle intelligence development. With development of a perception technology and improvement of a chip capability, intelligent driving provides increasingly abundant driving functions for people, and gradually implements driving experience of different levels. Society of automotive engineers (society of automotive engineers, SAE) provides a driving automation standard, including driving levels L0 to L5. The level L0 is no automation. A human driver is fully responsible for operating a vehicle, and may obtain warnings or assistance, for example, autonomous emergency braking (autonomous emergency braking, AEB), blind spot monitoring (blind spot monitoring, BSM), or lane departure warning (lane departure warning, LDW), from a driving system during driving. The level L1 is driver assistance. A driving operation is jointly performed by a human driver and a driving system, the driving system may provide driving support, for example, adaptive cruise control (adaptive cruise control, ACC) or lane keep assistance/support (lane keep assistance/support, LKA/LKS), for a steering wheel or acceleration/deceleration operations based on a driving environment, and another driving operation is performed by the human driver. The level L2 is partial automation. Driving support, for example, a vehicle following function in combination with adaptive cruise control (adaptive cruise control, ACC) and lane keep assistance (lane keep assistance, LKA), is provided for more of a steering wheel and acceleration/deceleration operations based on a driving environment, and another driving operation is performed by a human driver. The level L3 is conditional automation. A driving system may complete all driving operations. However, a human driver needs to respond to a request of the driving system at a suitable time point, that is, the human driver needs to be ready to take over the driving system. The level L4 is high automation. A driving system may complete all driving operations, and a human driver does not necessarily need to respond to a request of the driving system. For example, when road and environment conditions permit (for example, a closed campus, a highway, an urban road, or a fixed driving route), the human driver may not take over driving. The level L5 is full automation. A driving system may independently complete driving operations under various road and environment conditions that can be handled by a human driver. It can be learned that, at the levels L0 to L2, the driving system mainly provides support for the driver, and the driver still needs to perform driving supervision, and perform steering, braking, or acceleration as required, to ensure safety. At the levels L3 to L5, the driving system can replace the driver to complete all the driving operations. At the level L3, the driver needs to be ready to take over driving. At the levels L4 and L5, the driving system can implement full driving under some or all conditions, and the driver can choose whether to take over driving.

The foregoing classification is an example. Based on technology evolution or different regulations in different countries or regions, the foregoing classification may change. For example, the vehicle automation classification proposed by the Ministry of Industry and Information Technology of China includes six levels of vehicle driving automation, where levels 0 to 2 are driving assistance, the system assists a human in performing a dynamic driving task, and the driving subject is still a driver; and levels 3 to 5 are automated driving, the system performs a dynamic driving task in place of a human under a designed running condition, and when the function is activated, the driving subject is the system. Names and definitions of the levels are as follows: A level-0 driving automation (emergency assistance, emergency assistance) system cannot continuously perform horizontal or vertical motion control of a vehicle in a dynamic driving task, but has a capability of continuously detecting and responding to some targets and events in the dynamic driving task. A level-1 driving automation (partial driver assistance, partial driver assistance) system continuously performs horizontal or vertical motion control of a vehicle in a dynamic driving task under a designed running condition (which is referred to as operational design domain ODD) of the system, and has a capability of detecting and responding to some targets and events corresponding to the performed horizontal or vertical motion control of the vehicle. A level-2 driving automation (combined driver assistance, combined driver assistance) system continuously performs horizontal and vertical motion control of a vehicle in a dynamic driving task under a designed running condition of the system, and has a capability of detecting and responding to some targets and events corresponding to the performed horizontal and vertical motion control of the vehicle. A level-3 driving automation (conditionally automated driving, conditionally automated driving) system continuously executes all dynamic driving tasks under a designed running condition. A level-4 driving automation (highly automated driving, highly automated driving) system continuously executes all dynamic driving tasks and automatically executes the minimum risk maneuver under a designed running condition of the system. A level-5 driving automation (fully automated driving, fully automated driving) system continuously executes all dynamic driving tasks and automatically executes the minimum risk maneuver under any driving conditions. The horizontal control is mainly used for vehicle steering control, for example, controlling torque or an angle of a steering wheel to control a direction of the vehicle. The vertical control is mainly used for speed control of the vehicle, for example, controlling a brake pedal, an acceleration pedal, a gear, or the like to control acceleration/deceleration, braking, or the like of the vehicle.

Regardless of which classification manner is used, descriptions in embodiments of this application are applicable to the foregoing automated driving system that needs to fully or partially participate in driving of the vehicle.

### (2) Obstacle

In embodiments of this application, the obstacle is an entity that is not expected to collide with a vehicle in a driving process. The entity may be static or dynamic. The static entity may be a static object having a volume and mass, for example, a carton on a road, a road construction sign, a road boundary rail, a pile of soil, a tire, a vehicle that is turned over, a lying person, an animal, a road side building, a tree, a parked vehicle, a road sign, a utility pole, a road side isolation belt, or the like. The dynamic entity may be a moving object having a volume and mass, for example, a pedestrian (like a walking pedestrian or a bicycle rider), an animal, a vehicle, a vehicle carrying goods (for example, carrying a carton, a tree branch, or other goods), or the like.

### (3) Scene

The scene is an environment space that can be detected by a sensor on a vehicle in a driving process of the vehicle. It may be understood that in the driving process of the vehicle, each moment corresponds to one scene, and scenes corresponding to a plurality of moments include a scene corresponding to each of the plurality of moments.

### (4) Voxel

The voxel (voxel) may also be referred to as a stereo pixel or a volume element. The voxel is the smallest unit for separation in three-dimensional space, similar to the smallest unit in two-dimensional space, namely, a pixel. The three-dimensional space may be grid-divided and a feature may be given to each grid by using the voxel. In this case, the voxel represents a value on a regular grid in the three-dimensional space, and positioning of the voxel may be inferred based on a location of the voxel relative to another voxel.

The following describes technical solutions of embodiments in this application with reference to accompanying drawings.

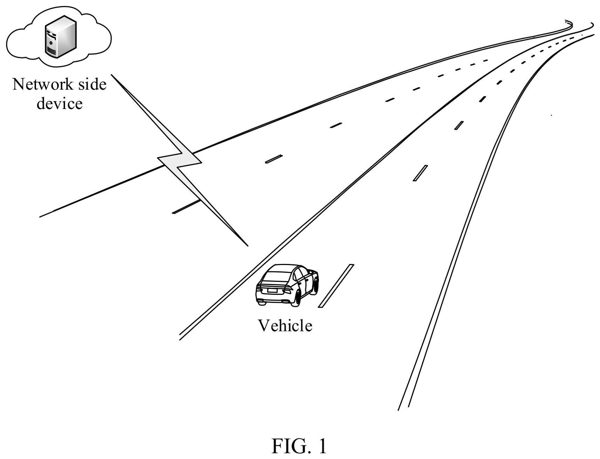

FIG. 1 is a diagram of a communication system according to an embodiment of this application. As shown in FIG. 1, the system includes a network side device and a vehicle. The network side device communicates with the vehicle in a wireless manner.

Herein, the network side device is a device having a computing capability. The network side device may be, for example, a server deployed on a network side (for example, a server for intelligent driving processing), or a component or a chip in the server. In some possible embodiments, the network side device may also be a system-level device including a plurality of servers or a computing device cluster. The network side device may be deployed in a cloud environment or an edge environment. This is not specifically limited in this embodiment of this application.

Herein, the vehicle is a vehicle configured with an automated driving system. The automated driving system is not limited to a fully automated driving system, a highly automated driving system, a conditionally automated driving system, a partially automated driving system, or the like. A person skilled in the art may understand that all non-fully manual driving systems for intelligent driving may be covered within this concept.

For example, depending on different power sources of the vehicle, the vehicle may be, for example, a new energy vehicle or a conventional vehicle. The conventional vehicle is a fuel vehicle, for example, may be a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

A camera and a radar are deployed on the vehicle. The camera is configured to collect image data of current surroundings of the vehicle, and the radar is configured to collect point cloud data of the current surroundings of the vehicle. The radar includes at least one of a lidar Lidar, a millimeter-wave radar Radar, or the like. Based on an installation location of a camera on a vehicle, the camera may be classified into, for example, a front-view camera, a ring-view camera, a rear-view camera, and a side-view camera. Based on a structure of a camera, the camera may be classified into, for example, a monocular camera, a binocular camera, and a wide-angle camera. Herein, a quantity of cameras configured on the vehicle is not limited in this embodiment of this application. For security purposes, the camera on the vehicle needs to be capable of collecting 360-degree image data around a body of the vehicle.

For example, a perception model is deployed on the network side device, and the network side device trains the perception model by using training data. The training data includes sensor data obtained from a data source device (for example, a collection vehicle platoon), where the sensor data includes image data collected by an in-vehicle camera and point cloud data collected by an in-vehicle radar. After training the perception model, the network side device may provide the trained perception model for the vehicle for use. For a specific training process of the perception model, refer to descriptions of corresponding content in the following method embodiments. Details are not described again.

Further, the vehicle may obtain the perception model (namely, the trained perception model) from the network side device. In a driving process of the vehicle, the vehicle collects, by using a sensor (for example, the camera or the radar) carried on the vehicle, data of an environment (or referred to as a scene) within a specific range from the vehicle to obtain collected data. The collected data includes, for example, image data and point cloud data that are collected for the scene. The vehicle processes the collected data by using the perception model to output perception information of the scene. The perception information indicates a voxel of an obstacle in the scene. The vehicle may control driving of the vehicle based on at least the perception information.

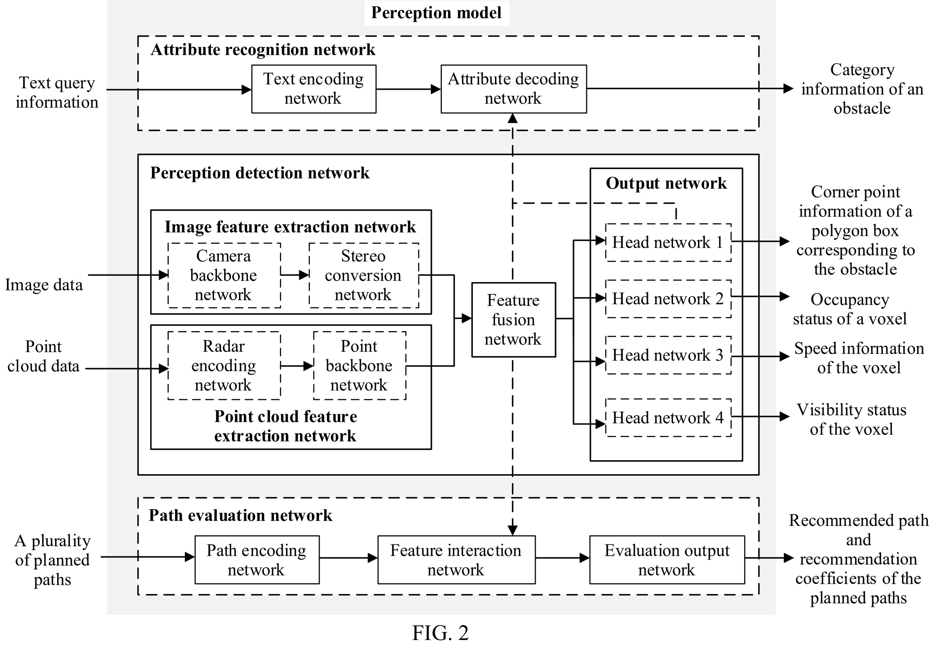

For details about the perception model, refer to related descriptions in the following embodiment in FIG. 2. Details are not described again.

In the system shown in FIG. 1, communication between the network side device and the vehicle may use a cellular communication technology, for example, 2G cellular communication such as a global system for mobile communications (global system for mobile communications, GSM) or a general packet radio service (general packet radio service, GPRS), or 3G cellular communication such as wideband code division multiple access (wideband code division multiple access, WCDMA), time division-synchronous code division multiple access (time division-synchronous code division multiple access, TD-SCDMA), or code division multiple access (code division multiple access, CDMA), or 4G cellular communication such as long term evolution (long term evolution, LTE) or LTE-based internet of vehicle wireless communication technology (vehicle to everything, V2X), or PC5 communication, or 5G cellular communication such as new radio (new radio, NR)-V2X PC5 communication, or another evolved cellular communication technology. A wireless communication system may alternatively communicate with a wireless local area network (wireless local area network, WLAN) by using a non-cellular communication technology like Wi-Fi. This is not specifically limited herein.

It may be understood that FIG. 1 is merely an example of an architectural diagram, but a quantity of network elements included in the system shown in FIG. 1 is not limited. In addition to functional entities shown in FIG. 1, another functional entity may be included in FIG. 1 although it is not shown in FIG. 1. In addition, a method provided in embodiments of this application may be applied to the communication system shown in FIG. 1. Certainly, the method provided in embodiments of this application may alternatively be applied to another communication system. This is not limited in embodiments of this application.

FIG. 2 is a diagram of a system of a perception model for intelligent driving according to an embodiment of this application.

In FIG. 2, the perception model includes a perception detection network. The perception detection network is configured to output perception information based on collected data (for example, including image data and point cloud data) collected through sensing for a scene. The perception information indicates a voxel of an obstacle in the scene. In some possible embodiments, the perception information further indicates a voxel of a road surface in the scene. The perception information may be used to assist driving of a vehicle.

The following describes a framework of the perception detection network.

In an implementation, when the collected data includes the image data and the point cloud data, the perception detection network includes an image feature extraction network, a point cloud feature extraction network, a feature fusion network, and an output network. The image feature extraction network is configured to extract a 3D image feature of the image data from the image data and output the feature to the feature fusion network. The point cloud feature extraction network is configured to extract, from the point cloud data, a point cloud feature of a voxel corresponding to the point cloud data and output the feature to the feature fusion network. The feature fusion network is configured to fuse the 3D image feature of the image data and the point cloud feature of the voxel corresponding to the point cloud data, to obtain a fusion feature of a voxel of a corresponding scene, and output the feature to the output network. The output network performs prediction based on the fusion feature of the voxel of the corresponding scene, and outputs the perception information of the scene.

For example, the feature fusion network in FIG. 2 may perform only spatial feature fusion. For example, the image data is an image captured by a camera at a t^{th} moment, and the point cloud data is data collected by a radar at the t^{th} moment. In this case, the feature fusion network needs to perform only spatial fusion on the 3D image feature of the image data at the t^{th} moment and the point cloud feature of the voxel corresponding to the point cloud data at the t^{th} moment.

For example, the feature fusion network in FIG. 2 may perform spatial and temporal feature fusion. For example, the image data is image data collected by a camera at n moments, and the point cloud data is point cloud data collected by a radar at the n moments. In this case, the feature fusion network may first perform spatial fusion on a 3D image feature corresponding to each of the n moments and a point cloud feature of a voxel corresponding to the moment, to obtain a spatial fusion feature of the voxel corresponding to the moment, and then perform temporal fusion on the spatial fusion feature of the voxel corresponding to each of the n moments.

In some possible embodiments, if the collected data includes only the image data, the point cloud feature extraction module in the perception detection network shown in FIG. 2 may be defaulted. If the image data is image data collected by the camera at the n moments, the feature fusion network performs temporal fusion on the 3D image feature corresponding to each of the n moments.

In some possible embodiments, if the collected data includes only point cloud data, the image feature extraction module in the perception detection network shown in FIG. 2 may be defaulted. If the point cloud data is point cloud data collected by the radar at the n moments, the feature fusion network performs temporal fusion on the point cloud feature of the voxel corresponding to each of the n moments.

For example, the feature fusion network may use a network structure of a recurrent neural network (recurrent neural network, RNN) or a recurrent convolutional neural network (recurrent CNN, RCNN), and a CNN may be, for example, a long short-term memory (long short-term memory, LSTM) network or a gated recurrent unit (gated recurrent unit, GRU) network.

Further, the image feature extraction network includes a camera backbone network and a stereo conversion network, where the camera backbone network is configured to extract a 2D image feature of image data, and the stereo conversion network is configured to convert the 2D image feature of the image data into a 3D image feature of the image data. Herein, the stereo conversion network may convert the 2D image feature into the 3D image feature in a vehicle body coordinate system, and the feature extracted from the point cloud data of the radar is a 3D feature in the vehicle body coordinate system. This helps the feature fusion network to perform feature fusion on features from different sensors subsequently, and helps eliminate a heterogeneous difference between multi-modal sensors.

For example, the 2D image feature of the image data includes but is not limited to a color feature, a shape feature, a texture feature, a spatial relationship feature, and the like of the image data.

For example, the camera backbone network may use a network structure of a convolutional neural network (convolutional neural network, CNN) (for example, a residual network Resnet), a transformer transformer network, a vision transformer (vision transformer, ViT) network, or another backbone network. The stereo conversion network may use a network structure of a transformer transformer network or a lift-splat-shoot (lift-splat-shoot, LSS) network.

Further, the point cloud feature extraction network includes a radar encoding network and a point backbone network. The radar encoding network is configured to perform voxelization processing on the point cloud data to establish a correspondence between a point and a voxel in the point cloud data, to obtain a feature of the voxel corresponding to the point cloud data. The point backbone network is configured to extract, based on the feature of the voxel corresponding to the point cloud data, a point cloud feature (namely, a 3D feature) of the voxel corresponding to the point cloud data. In some possible embodiments, the radar encoding network and the point backbone network may be combined into one network, to extract the point cloud feature of the voxel corresponding to the point cloud data. This is not specifically limited herein. In some possible embodiments, when computing power is supported, the radar encoding network and the point backbone network may also be combined into one network, and the network is used to extract the point cloud feature of the voxel corresponding to the point cloud data.

For example, the radar encoding network may use a network structure of a voxel feature encoding (voxel feature encoding, VFE) network or a pillar feature encoding (pillar feature encoding, PFE) network. The point backbone network may use a network structure of a convolutional neural network (for example, U-Net) or a transformer transformer network.

The output network is a detection head of the perception detection network. The output network includes at least one head network, and a quantity of head networks in the output network is determined based on a quantity of types of prediction results in the perception information output by the output network. For example, as shown in FIG. 2, the perception information includes an occupation status of a voxel, speed information of the voxel, a visibility status of the voxel, and corner point information of a polygon box corresponding to an obstacle. The polygon box corresponding to the obstacle is associated with a voxel of the obstacle. In this way, it can be learned that the perception information includes four types of prediction results. Therefore, the output network includes four head networks: a head network 1, a head network 2, a head network 3, and a head network 4. The head network 1 is configured to output the corner point information of the polygon box corresponding to the obstacle, the head network 2 is configured to output the occupation status of the voxel, the head network 3 is configured to output the speed information of the voxel, and the head network 4 is configured to output the visibility status of the voxel.

Herein, the visibility status of the voxel means that in a scene in which the vehicle is located at a current moment, if a specific voxel of the scene is not sensed by an observation signal of any sensor (including the camera and the radar) on the vehicle at the current moment, a visibility status of this voxel is invisible; and if this voxel is sensed by an observation signal of at least one sensor, the visibility status of the voxel is visible.

For example, the occupation status of the voxel means that in a scene in which the vehicle is located at a current moment, if an entity exists at a spatial location that corresponds to a specific voxel of the scene and that is in the physical world in which the scene is located, an occupation status of this voxel is occupied; and if no entity exists at the spatial location that corresponds to this voxel and that is in the physical world in which the scene is located, the occupation status of this voxel is empty (that is, not occupied). Herein, the entity may be understood as an object having a specific volume and mass. It may be understood that air is not an entity.

For example, any head network in the output network may use a network structure of a convolutional neural network CNN or a transformer transformer network. Herein, internal network structures of different head networks in the output network may be the same or may be different. It may be understood that different head networks process a same input feature in different manners.

In some possible embodiments, to reduce computing power consumption, in the perception detection network shown in FIG. 2, a neural sampling network may be further disposed between the feature fusion network and the output network. To be specific, the feature fusion network outputs the fusion feature of the voxel of the scene to the neural sampling network, and the neural sampling network processes the fusion feature of the voxel of the scene by using a different resolution based on an importance degree of an area in which the voxel of the scene is located. For example, if an importance degree of an area 1 in the scene is greater than an importance degree of an area 2 in the scene, a fusion feature of a voxel in the area 1 is processed by using a first resolution, and a fusion feature of a voxel in the area 2 is processed by using a second resolution, where the first resolution is greater than the second resolution. In this way, the neural sampling network can perform fine-grained processing on a voxel in a key area in the scene, and perform coarse-grained processing on a voxel in a non-key area in the scene. This can greatly reduce computing power, help improve data processing efficiency of the perception detection network, and also help reduce hardware deployment costs.

For example, the importance degree of the area 1 is greater than the importance degree of the area 2 when the area 1 and the area 2 meet at least one of the following conditions.

(1) A distance between the area 1 and the vehicle is less than a distance between the area 2 and the vehicle.

(2) A quantity of obstacles in the area 1 is greater than a quantity of obstacles in the area 2.

(3) A quantity of dynamic obstacles in the area 1 is greater than a quantity of dynamic obstacles in the area 2.

(4) A volume of an obstacle in the area 1 is greater than a volume of an obstacle in the area 2.

For example, the neural sampling network may use a network structure of a neural network, a multi-layer perceptron (multi-layer perceptron, MLP), or a transformer transformer network.

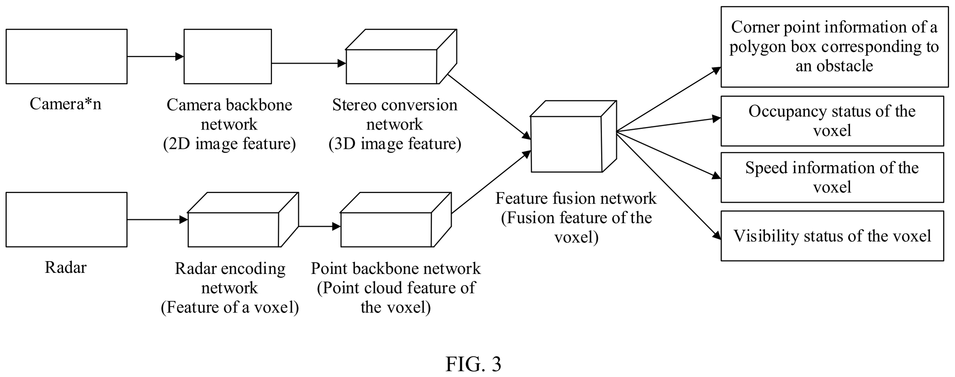

To display a feature extraction procedure of the perception detection network more clearly, refer to FIG. 3. FIG. 3 is a diagram of feature extraction of a perception detection network according to an embodiment of this application. In FIG. 3, a 2D image feature of image data may be extracted by using the camera backbone network based on the image data collected by n cameras. A 3D image feature of the image data may be extracted by using the stereo conversion network based on the 2D image feature of the image data. A feature (namely, a 3D feature) of a voxel corresponding to point cloud data may be extracted by using the radar encoding network based on the point cloud data collected by a radar. A point cloud feature (namely, the 3D feature) of the voxel corresponding to the point cloud data may be extracted by using the point backbone network based on the feature of the voxel corresponding to the point cloud data. The 3D image feature of the image data and the point cloud feature of the voxel corresponding to the point cloud data are fused by using the feature fusion network to output a fusion feature of the voxel. Finally, an occupation status of the voxel, speed information of the voxel, the visibility status of the voxel, and corner point information of a polygon box corresponding to an obstacle are respectively output by using the output network based on the fusion feature of the voxel.

It may be understood that FIG. 3 is merely an example of a feature extraction process of the perception detection network, and does not limit the feature extraction process in the perception detection network to be merely shown in FIG. 3.

In some possible embodiments, the perception model further includes an attribute recognition network. The attribute recognition network may be configured to recognize a category of the obstacle. For example, the attribute recognition network is configured to output category information of the obstacle based on text query information and a fusion feature of the voxel of the obstacle, where the text query information is used to request to query the category, the fusion feature of the voxel of the obstacle is determined based on the corner point information of the polygon box corresponding to the obstacle and the fusion feature of the voxel of the scene, and the polygon box corresponding to the obstacle is associated with the voxel of the obstacle. It can be learned from FIG. 2 that the corner point information of the polygon box corresponding to the obstacle is from the output network (specifically, the head network 1 in the output network) in the perception detection network, and the fusion feature of the voxel of the scene is an output of the feature fusion network in the perception detection network.

Herein, that the polygon box corresponding to the obstacle is associated with the voxel of the obstacle may be understood as that the corner point information of the polygon box corresponding to the obstacle is obtained based on index information of the voxel of the obstacle. For example, the corner point information of the polygon box corresponding to the obstacle may be obtained by the head network 1 in FIG. 2 by predicting the index information of the voxel of the obstacle based on a learned rule, or may be obtained through calculation by using a convex hull algorithm based on the index information of the voxel of the obstacle, which is not specifically limited herein.

Herein, the polygon box corresponding to the obstacle may be two-dimensional or three-dimensional. This is not specifically limited herein.

In an implementation, the attribute recognition network includes a text encoding network and an attribute decoding network, where the text encoding network is configured to extract a word vector feature of the text query information; and the attribute decoding network is configured to output the category information of the obstacle based on the word vector feature and the fusion feature of the voxel of the obstacle.

Herein, the text query information is used to request to query Q categories. It is assumed that a quantity of categories of obstacles in a scene is P, where Q and P are positive integers, and Q is greater than P. That is, a quantity of categories that are actually supported by the attribute recognition network for recognition is greater than categories of obstacles in any scene. In this way, it can be ensured that omission can be avoided when the attribute recognition network performs category recognition on the obstacles in any scene.

For example, in a category inference process, the text query information includes, for example, K text query information such as "Is it a vehicle", "Is it a pedestrian", "Is it a utility pole", "Is it a road sign", "Is it a road boundary rail", ..., and the like. The text encoding network in the attribute recognition network performs feature extraction on the K text query information to obtain a word vector feature corresponding to each text query information. The word vector feature corresponding to each text query information may represent an image semantic feature of a category indicated by the text query information. An example in which the attribute decoding network in the attribute recognition network recognizes a category of an obstacle 1 is used. The obstacle 1 is any obstacle in the scene. The attribute decoding network performs similarity calculation on a fusion feature of the voxel of the obstacle 1 and the word vector feature corresponding to each of the K text query information, to determine that a category corresponding to a word vector feature having a highest similarity to the fusion feature of the voxel of the obstacle 1 is the category of the obstacle 1, so that category information of the obstacle 1 may be output.

Herein, that the fusion feature of the voxel of the obstacle 1 is determined based on corner point information of a polygon box corresponding to the obstacle 1 and the fusion feature of the voxel of the scene may be that the corner point information of the polygon box corresponding to the obstacle 1 corresponds to index information of the voxel of the obstacle 1, and therefore the fusion feature of the voxel of the obstacle 1 may be determined from the fusion feature of the voxel of the scene based on the index information of the voxel of the obstacle 1.

For example, both the text encoding network and the attribute decoding network may use a network structure of a convolutional neural network or a transformer transformer network. It may be understood that the text encoding network and the attribute decoding network may adaptively adjust related parameters of the network based on functions of the text encoding network and the attribute decoding network.

In some possible embodiments, the perception model further includes a path evaluation network, and the path evaluation network may be configured to determine a recommended path for the vehicle. For example, the path evaluation network is configured to output recommendation coefficients of a plurality of planned paths and a recommended path in the plurality of planned paths based on the plurality of planned paths of the vehicle and the fusion feature of the voxel of the scene.

In an implementation, the path evaluation network includes a path encoding network, a feature interaction network, and an evaluation output network. The path encoding network is configured to extract a path feature of each of the plurality of planned paths of the vehicle. The feature interaction network is configured to obtain a risk feature of each planned path based on the path feature of each planned path and the fusion feature of the voxel of the scene. The evaluation output network is configured to output the recommendation coefficients of the plurality of planned paths and the recommended path in the plurality of planned paths based on the risk features of the plurality of planned paths.

For example, a recommendation coefficient of a planned path may be obtained based on at least one of a risk coefficient, comfort, and traffic efficiency of the planned path. The risk coefficient of the planned path is related to at least one of factors such as a distance between the planned path and an obstacle (including a visible obstacle and an obstacle that is currently in a blind spot), and whether the planned path collides with a path of another traffic participant on a road (for example, whether a collision occurs at a current moment or a future moment). The traffic efficiency of the planned path is related to at least one of factors such as a length of the planned path, estimated traffic duration corresponding to the planned path, a quantity of traffic lights on the planned path, and an area of a drivable area in which the planned path is located. The comfort of the planned path is related to at least one of factors such as a value of a steering acceleration and a steering frequency of the planned path, a change rate of an acceleration of the planned path, flatness of a road surface of the planned path, a quantity of traffic lights of the planned path, a type of the road on which the planned path is located, and whether a path area of the planned path is cool.

For example, the recommended path is a planned path corresponding to a highest recommendation coefficient in the plurality of planned paths.

For example, the path encoding network may use a network structure of a convolutional neural network, a transformer transformer network, a graph neural network (graph neural network, GNN), or a graph convolutional neural network (graph convolutional neural network, GCNN). The feature interaction network may use a network structure of a graph neural network or a transformer transformer network. The evaluation output network may use a network structure of a neural network or a multi-layer perceptron MLP.

It may be understood that the framework of the perception model shown in FIG. 2 is merely a feasible example provided in embodiments of this application, and should not constitute a limitation on the framework of the perception model.

For example, when the perception model includes the perception detection network, the attribute recognition network, and the path evaluation network, training of the perception detection network, the attribute recognition network, and the path evaluation network may be separated. For example, the perception detection network is first trained, and after the perception detection network is trained, the attribute recognition network and the path evaluation network are sequentially trained. Training of the perception detection network, the attribute recognition network, and the path evaluation network may alternatively be performed simultaneously. This is not specifically limited herein. For a training process of each network in the perception model, refer to descriptions of corresponding content in the following embodiments. Details are not described again.

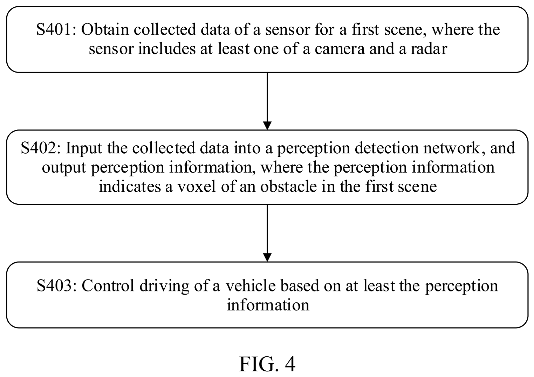

FIG. 4 is a flowchart of an intelligent driving method according to an embodiment of this application. The method may be applied to the vehicle in FIG. 1 or a component (for example, a chip or an integrated circuit) used for automated driving control on the vehicle, and at least the perception detection network is deployed on the vehicle. The method includes but is not limited to the following steps.

S401: Obtain collected data of a sensor for a first scene, where the sensor includes at least one of a camera and a radar.

Herein, the first scene may be understood as an environment space that can be detected by the sensor in a driving process of the vehicle.

Here, the sensor is deployed on the vehicle. Based on an installation location of a camera on a vehicle, the camera may be classified into, for example, a front-view camera, a ring-view camera, a rear-view camera, and a side-view camera. The radar includes at least one of a lidar or a millimeter-wave radar. A quantity of cameras and a quantity of radars that are configured on the vehicle are not limited in this embodiment of this application.

The camera is configured to collect image data, and the radar is configured to collect point cloud data. Therefore, the collected data includes at least one of the image data and the point cloud data.

For example, a plurality of cameras may be configured on the vehicle. Different cameras have different angles of view, so that the angles of view of the plurality of cameras may cover a 360-degree field of view centered on the vehicle. For example, angle-of-view ranges of adjacent cameras in the plurality of cameras may overlap. In this way, data in a same environment space may be collected by a plurality of sensors at the same time, which helps improve confidence of data observation.

For example, the sensor includes the camera and the radar. It is assumed that there are m cameras on the vehicle. The m cameras collect image data for the first scene. It is assumed that each camera captures one image at each moment, that is, collected data corresponding to each moment includes image data corresponding to m images collected by the cameras and point cloud data collected by the radar.

S402: Input the collected data into the perception detection network, and output perception information, where the perception information indicates a voxel of an obstacle in the first scene.

Herein, the obstacle is an entity that is not expected to collide with the vehicle in a driving process. The entity may be static or dynamic. The static entity may be a static object having a volume and mass, for example, a carton on a road, a road construction sign, a road boundary rail, a pile of soil, a tire, a vehicle that is turned over, a lying person, an animal, a road side building, a tree, a parked vehicle, a road sign, a utility pole, a road side isolation belt, or the like. The dynamic entity may be a moving object having a volume and mass, for example, a pedestrian (like a walking pedestrian or a bicycle rider), an animal, a vehicle, a vehicle carrying goods (for example, carrying a carton, a tree branch, or other goods), or the like.

Herein, the perception detection network is a perception detection network that has been trained and that is deployed at a vehicle end. The perception detection network is configured to output the perception information based on the collected data of the sensor for the first scene. For example, the perception detection network is obtained by the network side device shown in FIG. 1 by performing training based on a sensor data set and label information that corresponds to the sensor data set and that is generated through 4D reconstruction. The label information corresponding to the sensor data set may be generated by the network side device by performing 4D reconstruction based on the sensor data set in a self-supervision manner. The label information is used to provide truth value information of a prediction result of the perception detection network for the perception detection network in a training process of the perception detection network.

For example, a prediction task of the perception detection network includes four prediction tasks: predicting an occupation status of a voxel, speed information of a voxel, a visibility status of a voxel, and corner point information of a polygon box corresponding to the obstacle. In the training process of the perception detection network, it is assumed that current input data of the perception detection network is image data at a moment t and point cloud data at the moment t. In this case, the perception detection network performs processing of the foregoing four prediction tasks on the input data and outputs predicted perception information (namely, prediction results). Correspondingly, the label information includes truth value information of prediction results corresponding to the image data at the moment t and the point cloud data at the moment t.

In an implementation, the collected data includes image data and point cloud data, and the perception detection network includes an image feature extraction network, a point cloud feature extraction network, a feature fusion network, and an output network. In this case, for example, for a processing process of the perception detection network, refer to the following steps: A1 to A4.

A1: The image feature extraction network extracts a 3D image feature of the image data.

A2: The point cloud feature extraction network extracts a point cloud feature of a voxel corresponding to the point cloud data.

A3: The feature fusion network performs fusion based on the 3D image feature and the point cloud feature of the voxel corresponding to the point cloud data, to obtain a fusion feature of a voxel of the first scene.

A4: The output network processes the fusion feature of the voxel of the first scene and outputs the perception information.

Herein, for a specific inference process of the perception detection network, refer to the descriptions of the perception detection network in the embodiment in FIG. 2. For the image feature extraction network, the point cloud feature extraction network, the feature fusion network, and the output network, refer to the descriptions of corresponding content in the embodiment in FIG. 2. Details are not described again. It may be understood that the foregoing example does not constitute a limitation on a framework of the perception detection network.

In this embodiment of this application, the perception information includes at least one of the following information: an occupation status of the voxel of the first scene, speed information of the voxel of the first scene, a visibility status of the voxel of the first scene, and corner point information of the polygon box corresponding to the obstacle in the first scene, where the polygon box corresponding to the obstacle in the first scene is associated with the voxel of the obstacle.

For example, refer to the framework of the perception detection network shown in FIG. 2. It can be learned that the output network includes four head networks, and each head network corresponds to one prediction task. In this case, the perception information includes the occupation status of the voxel of the first scene, the speed information of the voxel of the first scene, the visibility status of the voxel of the first scene, and the corner point information of the polygon box corresponding to the obstacle in the first scene.

Herein, the occupation status of the voxel may be classified into two types: "occupied" and "empty". For the occupation status of the voxel, refer to the foregoing related descriptions of the occupation status of the voxel. Details are not described again.

For example, if a voxel 1 of a scene corresponds to a vehicle A in a physical world in which the scene is located, an occupation status of the voxel 1 is "occupied"; and if a voxel 2 of the scene corresponds to air in the physical world in which the scene is located, an occupation status of the voxel 2 is "empty".

Herein, the visibility status of the voxel may also be two types: "visible" and "invisible". For the visibility status of the voxel, refer to the foregoing related descriptions of the visibility status of the voxel. Details are not described again.

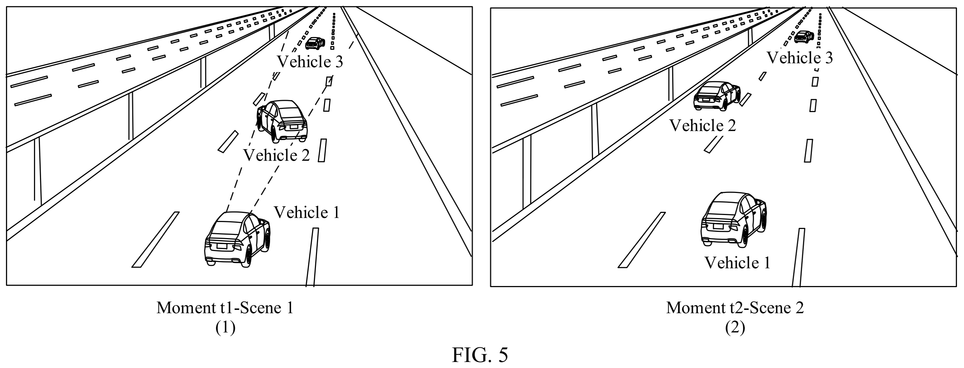

For example, the visibility status of the voxel may be changed. FIG. 5 is a diagram of some scenes according to an embodiment of this application. (1) in FIG. 5 shows a scene 1 corresponding to a moment t1. In (1) in FIG. 5, a vehicle 1 is a primary vehicle (to be specific, the perception detection network is deployed on the vehicle 1). It can be learned that the vehicle 1, a vehicle 2, and a vehicle 3 are located on a same lane, and the vehicle 2 is currently performing a lane change operation. It is assumed that a vehicle body shape of the vehicle 2 is greater than a vehicle body shape of the vehicle 3 in front. As a result, the vehicle 3 is completely blocked by the vehicle 2 from a perspective of the vehicle 1. The vehicle 3 is located in a blind spot of the vehicle 1. Therefore, an observation signal of any sensor on the vehicle 1 at the moment t1 cannot sense a voxel of the vehicle 3. In this case, in perception information output by the vehicle 1, a visibility status of a voxel of the vehicle 2 at the moment t1 is "visible", but a visibility status of the voxel of the vehicle 3 at the moment t1 is "invisible". (2) in FIG. 5 shows a scene 2 corresponding to a moment t2. It can be learned that the vehicle 2 currently completes the lane change operation. It is assumed that both the vehicle 2 and the vehicle 3 appear in a collection field of view of a sensor of the vehicle 1. In other words, it means that both the voxel of the vehicle 2 and the voxel of the vehicle 3 can be sensed by an observation signal of at least one sensor on the vehicle 1 at the moment t2. Therefore, in perception information output by the vehicle 1, a visibility status of the voxel of the vehicle 2 at the moment t2 is "visible", and a visibility status of the voxel of the vehicle 3 at the moment t2 is also "visible". Therefore, it can also be learned that collected data at a plurality of moments is input into the perception detection network, which cannot only supplement observation information, but also more realistically restore a physical world in which a scene is located from a plurality of perspectives.

S403: Control driving of the vehicle based on at least the perception information.

Herein, the controlling driving of the vehicle includes at least one of the following operations: lane change, driving speed adjustment, driving path adjustment, alarm light turn on, and vehicle suspension adjustment. In this way, the vehicle facilitates real-time decision-making based on at least the perception information, to improve safety in a driving process of the vehicle.

In an implementation, the controlling driving of the vehicle based on at least the perception information includes: adjusting a driving path of the vehicle based on at least the perception information, where an adjusted driving path does not pass through an area in which the voxel of the obstacle is located.

For example, it may be determined, based on the perception information, whether a current driving path of the vehicle collides with a voxel of an obstacle at a corresponding moment in the scene at a current moment and a future moment. When it is predicted that a collision occurs, the current driving path of the vehicle may be adjusted in a timely manner, so that an adjusted driving path does not pass through an area in which the voxel of the obstacle is located. In this way, the collision between the vehicle and the obstacle in a driving process can be avoided, thereby improving driving safety of the vehicle.

In an implementation, the perception information further indicates a voxel of a road surface in the first scene, and the controlling driving of the vehicle based on at least the perception information includes: generating road surface geometry information of the first scene based on at least the perception information; and adjusting a suspension in the vehicle based on the road surface geometry information.

Herein, the road surface geometry information indicates a status of the road surface (for example, whether the road surface has a pit or a bump) in the first scene. The vehicle may obtain the status of the road surface in front of the vehicle in advance based on the perception information. When it is detected that the road surface fluctuates, the vehicle has sufficient time to adjust the suspension of the vehicle in a timely manner, so that the vehicle keeps a horizontal and stable state as far as possible in the driving process, to reduce vibration caused by the fluctuation of the road surface, and improve comfort of taking the vehicle.

For example, the controlling driving of the vehicle based on the perception information may alternatively be: determining a blind spot in the scene and information about an obstacle (for example, speed information of the obstacle and corner point information of a polygon box corresponding to the obstacle) in the blind spot based on the perception information; and when the vehicle approaches the blind spot, controlling the vehicle to decelerate, stop, or steer based on the information about the obstacle in the blind spot. Herein, a category, a presentation form, and the like of the obstacle in the blind spot are not limited, and the obstacle in the blind spot may be static or dynamic. This is not specifically limited herein. In this way, when the vehicle approaches the blind spot in the scene at the current moment, the vehicle is controlled to be in a deceleration state, a stop state, or a steering state, so that a collision between the vehicle and the obstacle in the blind spot can be avoided, and driving safety of the vehicle is improved.

Herein, the blind spot is, for example, an area in which a voxel whose visibility status at a current moment is "invisible" in the perception information is located. For example, the blind spot includes a detection blind spot of the sensor and an area that is in an area that can be sensed by an observation signal of the sensor on the vehicle at the current moment and that cannot be sensed because of blocking by another obstacle.

Herein, the speed information of the obstacle may be obtained, for example, based on the speed information of the voxel of the obstacle.

In some possible embodiments, in addition to controlling the driving of the vehicle based on the perception information output by the vehicle, the vehicle may further control the driving of the vehicle based on at least one of navigation map information, high definition map information, live traffic information broadcast by a road side device, live traffic information broadcast by another surrounding vehicle, and the like. Herein, the road side device may be an apparatus, for example, a road side unit (road side unit, RSU), a multi-access edge computing (multi-access edge computing, MEC), or a sensor, or a component or a chip inside the apparatus, or may be a system-level device including an RSU and an MEC, or may be a system-level device including an RSU and a sensor, or may be a system-level device including an RSU, an MEC, and a sensor.

Optionally, in some possible embodiments, the intelligent driving method further includes: displaying the obstacle in the first scene based on the perception information, where the obstacle in the first scene is marked by using a polygon box; and/or displaying a voxel of the obstacle in the first scene based on the perception information.

For example, the obstacle or the voxel of the obstacle may be presented on a display apparatus of the vehicle. For example, the display apparatus may be an in-vehicle infotainment tablet, an in-vehicle display, a head-up display (head-up display, HUD) system, an augmented reality head-up display AR-HUD system, or the like of a vehicle-mounted device. This is not specifically limited herein.

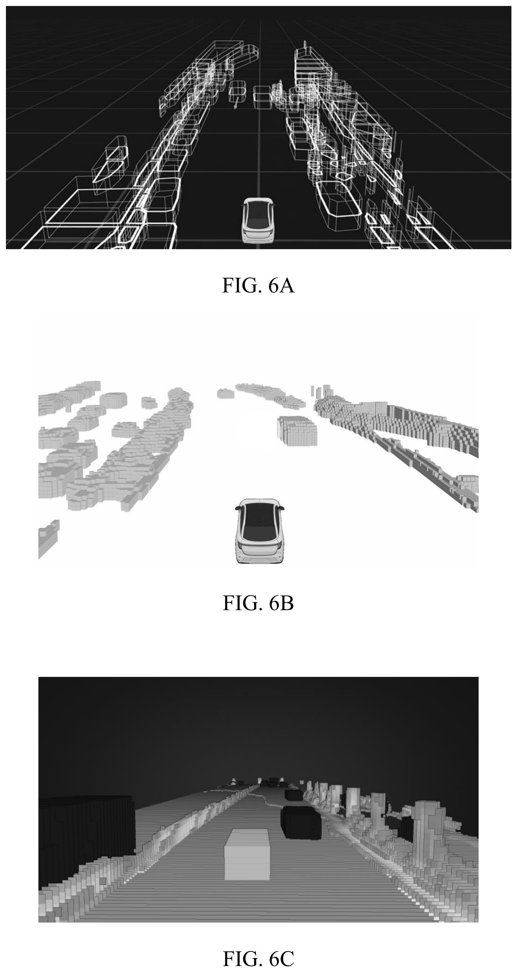

FIG. 6A is a diagram of making an obstacle in a scene by using a polygon box according to an embodiment of this application. FIG. 6A shows an obstacle in a scene in which a host vehicle is located at a current moment, where the obstacle is marked by using a polygon box. In FIG. 6A, a vehicle below a center is the host vehicle. It can be learned that the obstacle in surroundings of the host vehicle in the scene is marked and displayed by using the polygon box. It can be learned, based on a shape of the polygon box, that the obstacle in the scene includes at least a vehicle, a building, or the like. For example, the polygon box may be two-dimensional, or may be three-dimensional. A polygon box closest to the host vehicle on the right side of the host vehicle in FIG. 6A is used as an example. When the polygon box is displayed in a 2D mode, the polygon box may be formed by connecting 10 corner points indicated by one group of corner point information. When the polygon box is displayed in a 3D mode, the polygon box may be formed by connecting corner points indicated by a plurality of groups of corner point information, where each group of corner point information indicates 10 corner points. In some possible embodiments, for a dynamic obstacle in the scene, an arrow may be further added to a polygon box corresponding to the dynamic obstacle. The arrow indicates that the obstacle is a dynamic obstacle, a direction of the arrow indicates a movement direction of the obstacle, and a length of the arrow indicates a speed of the obstacle. It may be understood that FIG. 6A is merely an example of displaying a mark of an obstacle in a scene in which a vehicle is located at a specific moment, and should not constitute a limitation on displaying the mark of the obstacle in the scene in which the vehicle is located.

FIG. 6B is a diagram of displaying a voxel of an obstacle according to an embodiment of this application. FIG. 6B shows a voxel of an obstacle in a scene in which a host vehicle is located at a current moment. It can be learned that the voxel of the obstacle includes a plurality of voxels in the scene, and the voxel may be understood as a cube of a smallest unit in FIG. 6B. For example, in FIG. 6B, a dynamic obstacle and a static obstacle may be distinguished and displayed by using different colors (in other words, obstacles with different speeds may be distinguished by using different colors), or different obstacles may be distinguished by using different colors. This is not specifically limited herein. It may be understood that FIG. 6B is merely an example of displaying a voxel of an obstacle in a scene in which a vehicle is located at a specific moment, and should not constitute a limitation on displaying the voxel of the obstacle in the scene in which the vehicle is located.

In some possible embodiments, a voxel of a road surface in a scene in which the vehicle is located currently may be further displayed. FIG. 6C is a diagram of displaying a voxel of a road surface in a scene according to an embodiment of this application. In FIG. 6C, not only the voxel of the obstacle in the scene at the current moment is displayed, but also a voxel of a road surface in the scene at the current moment is displayed. In this way, a fluctuation degree of the road surface in front can be seen based on FIG. 6C. It may be understood that FIG. 6C is merely an example of displaying a voxel of an obstacle and a voxel of a road surface in a scene in which a vehicle is located at a specific moment, and should not constitute a limitation on displaying the voxel of the obstacle and the voxel of the road surface in the scene in which the vehicle is located.

In some possible embodiments, in addition to the perception detection network, an attribute recognition network may be further deployed on the vehicle, where the attribute recognition network is configured to recognize a category of an obstacle. In this way, the vehicle cannot only detect an obstacle in surroundings, but also recognize a category of the obstacle in a driving process, thereby implementing that the vehicle cannot only see an object but also understand the object.

Further, the intelligent driving method further includes: obtaining text query information; inputting the text query information and a fusion feature of the voxel of the obstacle into the attribute recognition network, and outputting category information of the obstacle, where the text query information is used to request to query a category; and displaying the category information of the obstacle. The fusion feature of the voxel of the obstacle is determined based on the corner point information of the polygon box corresponding to the obstacle and the fusion feature of the voxel of the first scene, and the polygon box corresponding to the obstacle is associated with the voxel of the obstacle. The corner point information of the polygon box corresponding to the obstacle and the fusion feature of the voxel of the first scene both are from the perception detection network. Further, based on the perception detection network shown in FIG. 2, it can be learned that the corner point information of the polygon box corresponding to the obstacle is from the output network in the perception detection network, and the fusion feature of the voxel of the first scene is from the feature fusion network in the perception detection network. For details of this embodiment, refer to the related descriptions of the attribute recognition network in the embodiment in FIG. 2. For brevity of the specification, details are not described again.

In some possible embodiments, after the perception information is obtained, further fusion processing may be performed based on a detection result of a detection algorithm configured in the camera, a detection result of a detection algorithm configured in the radar, or a detection result of another model. In this way, when a same obstacle can be sensed in a plurality of different manners, confidence of detecting the obstacle is higher.

In some possible embodiments, in addition to the perception detection network, a path evaluation network may be further deployed on the vehicle, where the path evaluation network is used to recommend a lowest-risk path to the vehicle. This helps improve driving safety and driving decision accuracy.

Further, the intelligent driving method further includes: obtaining a plurality of planned paths of the vehicle; inputting the plurality of planned paths of the vehicle and the fusion feature of the voxel of the first scene into the path evaluation network, and outputting recommendation coefficients of the plurality of planned paths and a recommended path in the plurality of planned paths, where the recommended path is associated with the recommendation coefficients of the plurality of planned paths; and displaying the recommended path. It can be learned that the fusion feature of the voxel of the first scene is from the perception detection network. Based on the description of the perception detection network in FIG. 2, it can be learned that the fusion feature of the voxel of the first scene is provided by the feature fusion network in the perception detection network. Herein, the plurality of planned paths are generated by the vehicle. For example, the vehicle generates a plurality of planned paths based on navigation map information. For details of this embodiment, refer to the related descriptions of the path evaluation network in the embodiment in FIG. 2. For brevity of the specification, details are not described again.

For example, the recommended path output by the path evaluation network includes at least two planned paths in the plurality of planned paths. In this case, in a human-computer co-driving scenario, the recommended path may be further used by a user to be recommended; feedback information is received from the user, where the feedback information indicates a path selected by the user from the at least two planned paths; and a vehicle of the user is controlled to drive along the path selected by the user.

It may be understood that, when the recommended path includes a plurality of planned paths, it may be understood that recommendation coefficients of the planned paths included in the recommended path are similar or the same. However, some planned paths are paths with the shortest consumed time, some planned paths are paths with the highest comfort, some planned paths are paths with the shortest distances, and the like. In this case, the user may choose a path according to a requirement of the user, thereby providing good passenger experience for the user.

In some possible embodiments, the perception detection network, the attribute recognition network, and the path evaluation network may also be deployed on the vehicle. For corresponding descriptions, refer to the descriptions in corresponding embodiments. Details are not described again.

It can be learned that, in this embodiment of this application, the perception detection network is deployed on the vehicle, so that a perception capability of the vehicle for the surroundings can be enhanced, so that the vehicle can perceive an ambient obstacle in a driving process, to avoid a collision and improve safety of the vehicle. In addition, the attribute recognition network is deployed on the vehicle, so that the vehicle can further recognize the category of the obstacle when the obstacle is perceived, to improve intelligence of the vehicle.

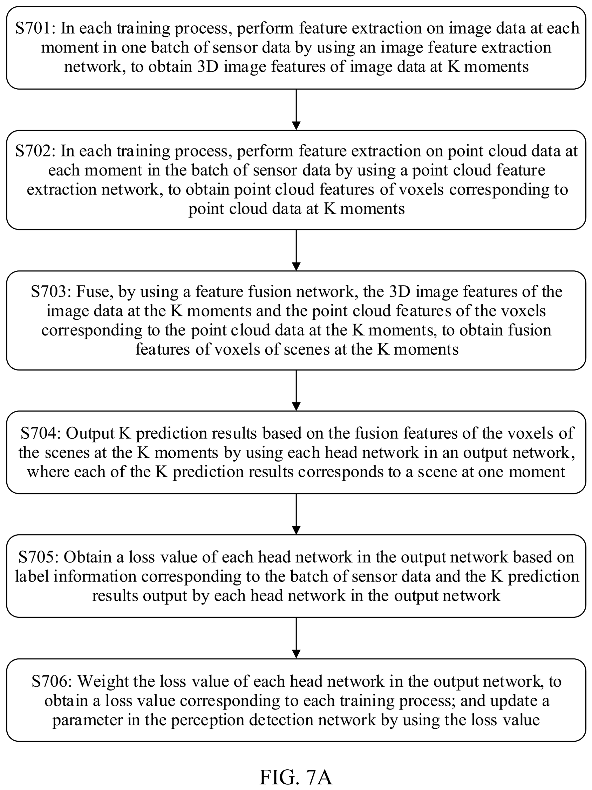

FIG. 7A is a flowchart of a training method of a perception detection network according to an embodiment of this application. The method may be applied to the network side device shown in FIG. 1 or a component (for example, a chip or an integrated circuit) in the network side device. The perception detection network shown in FIG. 2 is used as an example. The perception detection network includes the image feature extraction network, the point cloud feature extraction network, the feature fusion network, and the output network. The output network includes a plurality of head networks. The method includes but is not limited to the following steps.

S701: In each training process, perform feature extraction on image data at each moment in one batch of sensor data by using the image feature extraction network, to obtain 3D image features of image data at K moments.

For example, one batch of sensor data used in each training process is located in a sensor data set.

For example, one batch of sensor data includes image data at the K moments, where the image data at the K moments is from at least one camera of a vehicle, and K is a positive integer.

Specifically, the image data at the K moments in the batch of sensor data is input to the image feature extraction network, and the image feature extraction network obtains, based on the image data at each moment, a 3D image feature of the image data at the moment. Therefore, the image feature extraction network obtains the 3D image features of the image data at the K moments, and outputs the 3D image features to the feature fusion network.

Herein, for a framework of the image feature extraction network, refer to the descriptions of corresponding content in the embodiment in FIG. 2. Details are not described again.

S702: In each training process, perform feature extraction on point cloud data at each moment in the batch of sensor data by using the point cloud feature extraction network, to obtain point cloud features of voxels corresponding to point cloud data at K moments.

Herein, the batch of sensor data further includes point cloud data at the K moments, and the point cloud data at the K moments is from at least one radar of the vehicle.

Specifically, the point cloud data at the K moments in the batch of sensor data is input to the point cloud feature extraction network, and the point cloud feature extraction network obtains, based on the point cloud data at each moment, a point cloud feature of a voxel corresponding to the point cloud data at the moment. Therefore, the point cloud feature extraction network obtains the point cloud features of the voxels corresponding to the point cloud data at the K moments, and outputs the point cloud features to the feature fusion network.

S703: Perform feature fusion, by using the feature fusion network, on the 3D image features of the image data at the K moments and the point cloud features of the voxels corresponding to the point cloud data at the K moments, to obtain fusion features of voxels of scenes at the K moments.

Herein, the voxel of the scene is a voxel obtained after feature fusion is performed by using the feature fusion network.

For example, the feature fusion network performs spatial fusion based on the 3D image feature of the image data at each moment and the point cloud feature of the voxel corresponding to the point cloud data at the moment, to obtain a spatial fusion feature of a voxel of a scene at the moment. The feature fusion network then performs temporal fusion based on the spatial fusion features of the voxels of the scenes at the K moments, to obtain the fusion features of the voxels the scenes at the K moments. In this case, the voxel fusion feature of the voxel of the scene at each moment may be referred to as a spatial-temporal fusion feature of the voxel of the scene at the moment.

S704: Output K prediction results based on the fusion features of the voxels of the scenes at the K moments by using each head network in the output network, where each of the K prediction results corresponds to a scene at one moment.

The fusion features of the voxels of the scenes at the K moments correspond to each head network in the output network, and each head network in the output network performs one prediction task.

For example, the output network shown in FIG. 2 includes the head network 1, the head network 2, the head network 3, and the head network 4. The head network 1 is configured to predict corner point information of a polygon box corresponding to an obstacle in a scene, the head network 2 is configured to predict an occupation status of a voxel of the scene, the head network 3 is configured to predict speed information of the voxel of the scene, and the head network 4 is configured to predict a visibility status of the voxel of the scene.

Specifically, in the output network, each head network performs prediction based on the fusion feature of the voxel of the scene at each moment, to obtain a prediction result corresponding to the scene at the moment, so that each head network may obtain the K prediction results.

The head network 1 in the output network shown in FIG. 2 is used as an example. It is assumed that the K moments include a moment t₁, a moment t₂, ..., and a moment t_{K}. The head network 1 outputs a prediction result 1 based on a fusion feature of a voxel of a scene at the moment t₁, where the prediction result 1 includes corner point information of a polygon box corresponding to an obstacle in the scene at the moment t₁. The head network 1 outputs a prediction result 2 based on a fusion feature of a voxel of a scene at the moment t₂, where the prediction result 2 includes corner point information of a polygon box corresponding to an obstacle in the scene at the moment t₂; ..., and by analogy, the head network 1 outputs the K prediction results based on the fusion features of the voxels of the scenes at the K moments.

S705: Obtain a loss value of each head network in the output network based on label information corresponding to the batch of sensor data and the K prediction results output by each head network in the output network.

The label information corresponding to the batch of sensor data is generated through 4D reconstruction based on the batch of sensor data. The label information corresponding to the batch of sensor data is used to provide, for the perception detection network, truth value information corresponding to the prediction results of the perception detection network for the batch of sensor data.

The output network shown in FIG. 2 is used as an example. The label information corresponding to the batch of sensor data includes truth value information of the corner point information of the polygon boxes corresponding to the obstacles in the scenes at the K moments, truth value information of the occupation status of the voxels of the scenes at the K moments, truth value information of the speed of the voxels of the scenes at the K moments, and truth value information of the visibility status of the voxels of the scenes at the K moments, where the truth value information of the corner points of the polygon boxes corresponding to the obstacles in the scenes at the K moments corresponds to the K prediction results output by the head network 1, the truth value information of the occupation status of the voxels of the scenes at the K moments corresponds to the K prediction results output by the head network 2, the truth value information of the speed of the voxels of the scenes at the K moments corresponds to the K prediction results output by the head network 3, and the truth value information of the visibility status of the voxels of the scenes at the K moments corresponds to the K prediction results output by the head network 4.

Calculation of a loss value of the head network 1 is used as an example. The loss value of the head network 1 is obtained based on the truth value information of the corner points of the polygon boxes corresponding to the obstacles in the scenes at the K moments in the label information and the K prediction results output by the head network 1. For example, a loss value of the head network 1 at each moment may be first obtained based on truth value information of the corner point information of the polygon box corresponding to the obstacle in the scene at the moment and a prediction result (that is, including the corner point information of the polygon box corresponding to the obstacle in the scene at the moment) at the moment in the K prediction results output by the head network 1, and then the loss value of the head network 1 is obtained based on the loss value of the head network 1 at each of the K moments. Similarly, another head network in the output network may also use this manner to calculate a loss value of the another head network, so that the loss value of each head network in the output network may be obtained.

S706: Weight the loss value of each head network in the output network, to obtain a loss value corresponding to each training process; and update a parameter in the perception detection network by using the loss value.

Herein, a weight of each head network in the output network may be customized by the user.

After the loss value corresponding to each training process is obtained, the parameter in the perception detection network (for example, including each head network in the output network, the feature fusion network, the image feature extraction network, and the point cloud feature extraction network) is updated by using the loss value.

It may be understood that FIG. 7A is an example in which the perception detection network is separately trained, and a training procedure of the perception detection network is not limited to a form shown in FIG. 7A. In some possible embodiments, each head network in the output network in the perception detection network may also be separately trained. In this case, S706 is not necessary to be performed. In some possible embodiments, the perception detection network may further perform joint training with a neural radiance field NeRF network, to further improve detection accuracy and training efficiency. This is not specifically limited herein.

In this embodiment of this application, the label information corresponding to the batch of sensor data in each training process does not need to be generated through manual annotation, thereby not only reducing labor consumption, but also improving label information obtaining efficiency. The perception detection network uses a self-supervised training manner, so that it can be learned that perception information in a scene in which the vehicle is located at any moment can be accurately predicted based on input data of the vehicle at the moment.

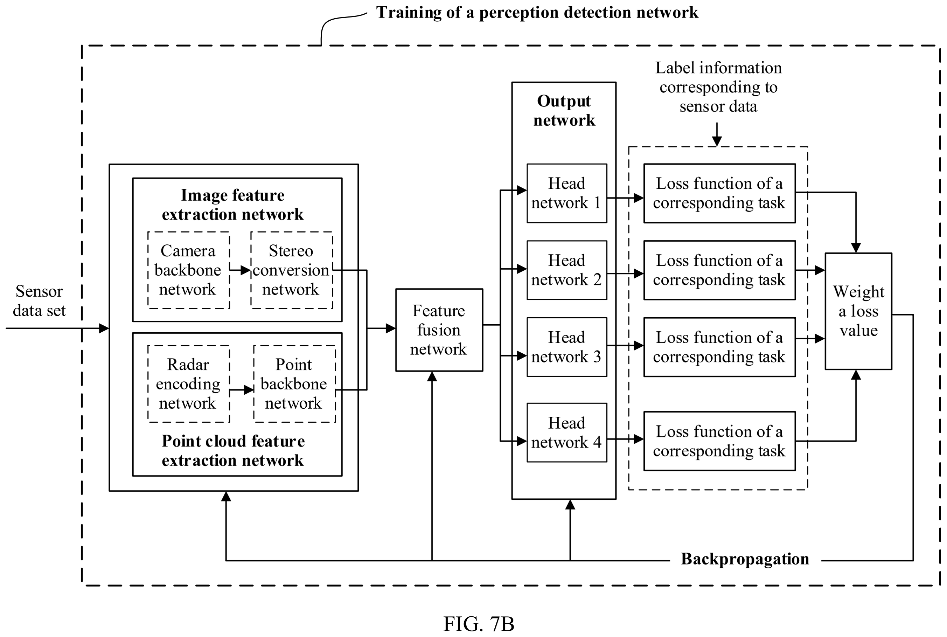

FIG. 7B is a diagram of a training process of a perception detection network according to an embodiment of this application.

As shown in FIG. 7B, one batch of sensor data in a sensor data set is input into an image feature extraction network and a point cloud feature extraction network in the perception detection network. The image feature extraction network performs feature extraction on image data in the batch of sensor data, to obtain a 3D image feature of the image data. The point cloud feature extraction network performs feature extraction on point cloud data in the batch of sensor data, to obtain a point cloud feature of a voxel corresponding to the point cloud data. A feature fusion network in the perception detection network performs feature fusion on the 3D image feature of the image data from the image feature extraction network and the point cloud feature of the voxel corresponding to the point cloud data from the point cloud feature extraction network, to obtain a fusion feature of a voxel of a scene, and inputs the fusion feature of the voxel of the scene into an output network in the perception detection network. Each head network in the output network obtains a corresponding prediction result based on the fusion feature of the voxel of the scene. A loss value of each head network in the output network is obtained based on the prediction result output by each head network in the output network and label information corresponding to the batch of sensor data, the loss value of each head network in the output network is weighted, and a loss value corresponding to the training process is used to perform backpropagation, to sequentially update parameters of the output network, the feature fusion network, and the feature extraction network (including the image feature extraction network and the point cloud feature extraction network). It may be understood that FIG. 7B is merely an example of the training process of the perception detection network, and the training process of the perception detection network is not limited to that shown in FIG. 7B. For example, each head network in the output network may also be separately trained.

Herein, for specific training of the perception detection network, refer to the related descriptions in the embodiment in FIG. 7A. Details are not described again.

In some possible embodiments, after training on the perception detection network is completed, an attribute recognition network may be trained. The following describes a training process of the attribute recognition network.

The attribute recognition network shown in FIG. 2 is used as an example. The attribute recognition network includes a text encoding network and an attribute decoding network. For example, the text encoding network may directly use a trained word vector feature extractor (or may be obtained through text-image pre-training learning). In this embodiment of this application, only the attribute decoding network may be trained. The trained word vector feature extractor may extract a word vector feature of text query information based on the input text query information, and the word vector feature of the text query information may represent an image semantic feature of a category indicated by the text query information.

For example, a process of obtaining the text encoding network through text-image pre-training may be: obtaining massive text-image training data, where the text-image training data includes a plurality of text-image data groups, and each text-image data group includes text information indicating category information and an image corresponding to the text information, for example, a text-image training group 1 includes text information indicating a vehicle and an image of the vehicle; inputting text information in the text-image training data into a text encoder to extract a word vector feature of each piece of text information; inputting images in the text information in the text-image training data into an image encoder to extract an image feature of each image; and adjusting a parameter of the text encoder and a parameter of the image encoder based on a training idea that a word vector feature of text information and an image feature of an image that belongs to a same text-image data group with the text information are as close as possible, and a word vector feature of text information and an image feature of an image that belongs to different text-image data groups with the text information are as far as possible. In this way, the trained text encoder may be directly used as the text encoding network in the attribute recognition network.

For example, the training of the attribute decoding network may be: The text encoding network inputs a word vector feature of each piece of text query information into the attribute decoding network based on a plurality of pieces of received text query information; the attribute decoding network predicts category information of each obstacle based on word vector features of the plurality of pieces of text query information and the fusion feature of the voxel of the obstacle provided by the perception detection network, and obtains a loss value of the training of the attribute decoding network based on the predicted category information of each obstacle and the category annotation information of each obstacle; and a parameter of the attribute decoding network is reversely updated based on the loss value of the training of the attribute decoding network.

In some possible embodiments, after training on the perception detection network is completed, a path evaluation network may be trained. The following describes a training process of the path evaluation network.

The path evaluation network shown in FIG. 2 is used as an example. The path evaluation network includes a path encoding network, a feature interaction network, and an evaluation output network. For example, the training process of the path evaluation network may be: obtaining path training data, where the path training data includes a plurality of paths planned by the vehicle within K moment ranges and recommendation coefficient annotation information of the plurality of paths; inputting the plurality of paths into the path encoding network, where the path encoding network outputs an extracted path feature of each path into the feature interaction network, the feature interaction network outputs a risk feature of each path based on the path feature of each path and the fusion features of the voxels of the scenes at the K moments (from the perception detection network), and the evaluation output network outputs predicted recommendation coefficients of the plurality of paths based on risk features of the plurality of paths, and determines a predicted recommended path from the plurality of paths based on the predicted recommendation coefficients of the plurality of paths; obtaining loss values of the plurality of paths based on the predicted recommendation coefficients of the plurality of paths and the recommendation coefficient annotation information of the plurality of paths, where the loss values of the plurality of paths are obtained by weighting a loss value of each of the plurality of paths; and updating a parameter in the path evaluation network based on the loss values of the plurality of paths.

It can be learned that the training of the perception detection network, the attribute recognition network, and the path evaluation network is separately and independently performed. In some possible embodiments, the perception detection network, the attribute recognition network, and the path evaluation network may also perform joint training. In this case, a loss value corresponding to each training process is obtained by weighting a loss value of the attribute recognition network in the training process, a loss value of the perception detection network in the training process (namely, a loss value of the attribute decoding network in the training process), and a loss value of the path evaluation network in the training process. Finally, parameters in the perception detection network, the attribute decoding network in the attribute recognition network, and the path evaluation network may be separately updated based on the loss values in the training process.

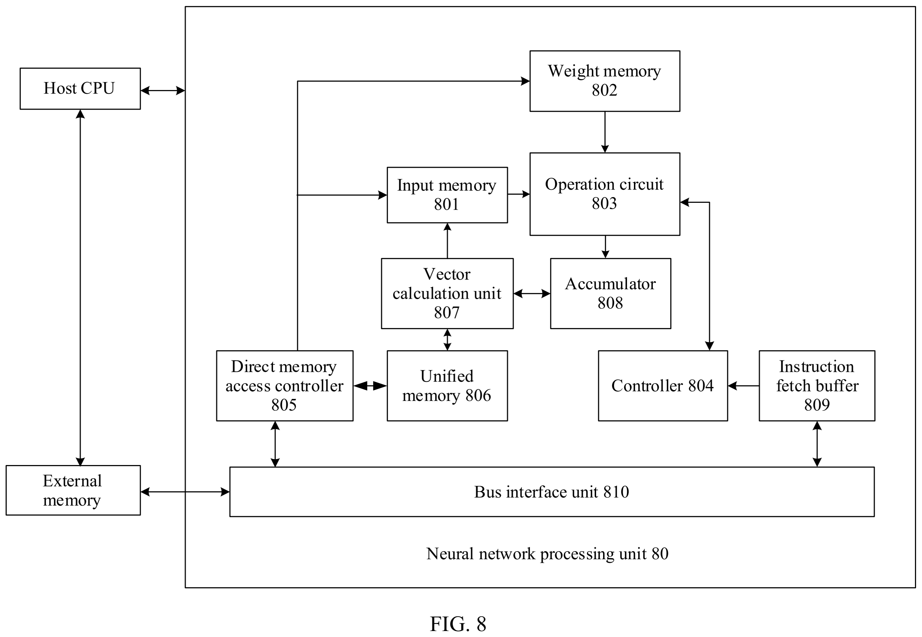

FIG. 8 is a diagram of a hardware structure of a chip according to an embodiment of this application. The chip may be configured to perform the intelligent driving method and/or the training method in embodiments of this application.

As shown in FIG. 8, a neural network processing unit (neural network processing unit, NPU) 80 is mounted to a host CPU (Host CPU) as a coprocessor, and the host CPU allocates a task, to perform related processes of the intelligent driving method in the foregoing embodiments or the training method in the foregoing embodiments.

A core part of the NPU is an operation circuit 803, and a controller 804 controls the operation circuit 803 to extract data in a memory (a weight memory or an input memory) and perform an operation.

In some implementations, the operation circuit 803 includes a plurality of process elements (process engines, PEs). In some implementations, the operation circuit 803 is a two-dimensional systolic array. Alternatively, the operation circuit 803 may be a one-dimensional systolic array, or another electronic circuit that can perform mathematical operations such as a multiplication and addition. In some implementations, the operation circuit 803 is a general matrix processor.

For example, it is assumed that there is an input matrix A, a weight matrix B, and an output matrix C. The operation circuit extracts corresponding data of the matrix B from a weight memory 802, and buffers the corresponding data into each PE in the operation circuit. The operation circuit extracts data of the matrix A from an input memory 801, performs a matrix operation between the data of the matrix A and the matrix B to obtain a partial matrix result or a final matrix result, and stores the result in an accumulator (accumulator) 808.

A vector calculation unit 807 may perform further processing on the output of the operation circuit, for example, vector multiplication, vector addition, exponential operation, logarithmic operation, and value comparison. For example, the vector calculation unit 807 may be used for network calculation of a non-convolutional/non-FC layer in a neural network, such as pooling (pooling), batch normalization (batch normalization), and local response normalization (local response normalization).

In some implementations, the vector calculation unit 807 can store a processed output vector in the unified memory 806. For example, the vector calculation unit 807 may apply a nonlinear function, for example, a vector of accumulated values, to an output of the operation circuit 803 to generate an activation value. In some implementations, the vector calculation unit 807 generates a normalized value, a combined value, or a normalized value and a combined value. In some implementations, the processed output vector can be used as an activation input to the operation circuit 803, for example, used by a subsequent layer in the neural network.

A unified memory 806 is configured to store input data and output data.

A direct memory access controller 805 (direct memory access controller, DMAC) transfers input data in an external memory to the input memory 801 and/or the unified memory 806, stores weight data in the external memory into the weight memory 802, and stores data in the unified memory 806 into the external memory.

A bus interface unit (bus interface unit, BIU) 810 is configured to implement interaction between the host CPU, the DMAC, and an instruction fetch buffer 809 through a bus.

The instruction fetch buffer (instruction fetch buffer) 809 connected to the controller 804 is configured to store instructions to be used by the controller 804.

The controller 804 is configured to invoke the instructions buffered in the instruction fetch buffer 809, to control a working process of the operation accelerator.

Usually, all the unified memory 806, the input memory 801, the weight memory 802, and the instruction fetch buffer 809 are on-chip (On-Chip) memories, and the external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

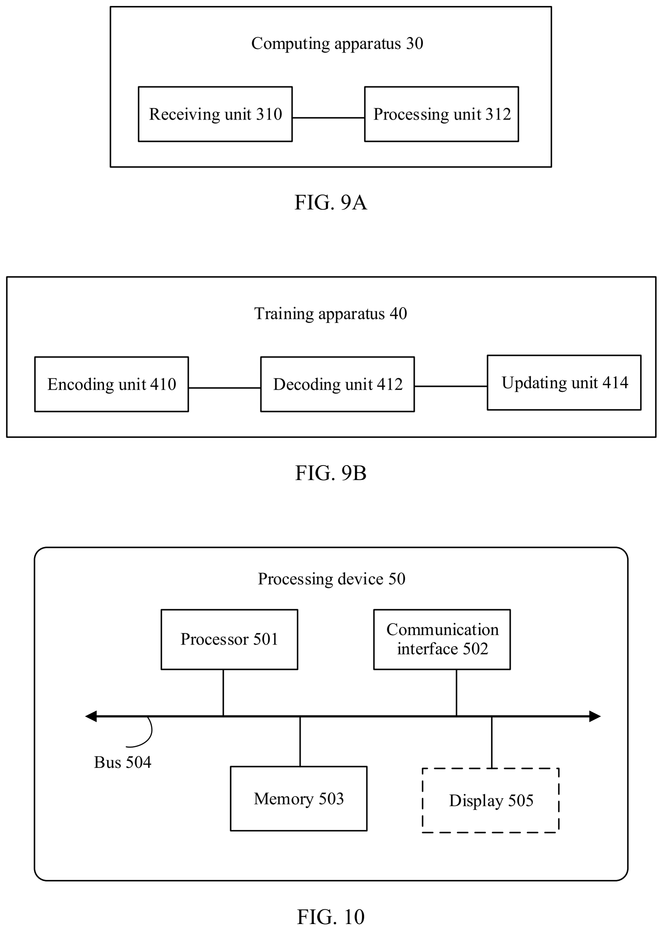

FIG. 9A is a diagram of a structure of a computing apparatus according to an embodiment of this application. A computing apparatus 30 includes a receiving unit 310 and a processing unit 312. The computing apparatus 30 may be implemented by using hardware, software, or a combination of software and hardware.

The receiving unit 310 is configured to obtain collected data of a sensor for a first scene, where the sensor includes at least one of a camera and a radar. The processing unit 312 is configured to input the collected data into a perception detection network, and output perception information, where the perception information indicates a voxel of an obstacle in the first scene. The processing unit 312 is further configured to display the voxel of the obstacle based on at least the perception information.

In some possible embodiments, the computing apparatus 30 further includes a display unit 314 (not shown in the figure). The display unit 314 is configured to display the obstacle based on the perception information, where the obstacle is marked by using a polygon box; and/or display the voxel of the obstacle based on the perception information.

The computing apparatus 30 may be configured to implement the method described in the embodiment in FIG. 4. In the embodiment in FIG. 4, the receiving unit 310 may be configured to perform S401, and the processing unit 312 may be configured to perform S402 and S403.

FIG. 9B is a diagram of a structure of a training apparatus according to an embodiment of this application. The training apparatus 40 includes an encoding unit 410, a decoding unit 412, and an updating unit 414. The training apparatus 40 may be implemented by using hardware, software, or a combination of software and hardware.

The encoding unit 410 is configured to: in each training process, perform feature extraction on image data at each moment in one batch of sensor data by using an image feature extraction network, to obtain 3D image features of image data at K moments, where K is a positive integer; and in each training process, perform feature extraction on point cloud data at each moment in the batch of sensor data by using a point cloud feature extraction network, to obtain point cloud features of voxels corresponding to point cloud data at K moments, and perform feature fusion, by using a feature fusion network, on the 3D image features of the image data at the K moments and the point cloud features of the voxels corresponding to the point cloud data at the K moments, to obtain fusion features of voxels of scenes at the K moments. The decoding unit 412 is configured to output K prediction results based on the fusion features of the voxels of the scenes at the K moments by using each head network in an output network, where each of the K prediction results corresponds to a scene at one moment. The updating unit 414 is configured to: obtain a loss value of each head network in the output network based on label information corresponding to the batch of sensor data and the K prediction results output by each head network in the output network, weight the loss value of each head network in the output network, to obtain a loss value corresponding to each training process, and update a parameter in a perception detection network by using the loss value.

The training apparatus 40 may be configured to implement the method described in the embodiment in FIG. 7A. In the embodiment in FIG. 7A, the encoding unit 410 may be configured to perform S701 to S703, the decoding unit 412 may be configured to perform S704, and the updating unit 414 may be configured to perform S705 and S706.

It should be understood that division of the units in the foregoing apparatus (for example, the computing apparatus 30 and the training apparatus 40) is merely logical function division. During actual implementation, all or some of the units may be integrated into one physical entity, or may be physically separated. In addition, the units in the apparatus may be implemented in a form of invoking software by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by using a programmable logic device (programmable logic device, PLD), for example, a field programmable gate array (field programmable gate array, FPGA) may include a large quantity of logic gate circuits, and a connection relationship between the logic gate circuits is configured by using a configuration file, to implement the functions of some or all of the units. All of the units of the apparatus may be implemented in the form of invoking software by the processor or in the form of the hardware circuit, or some of the units are implemented in the form of invoking software by the processor, and the remaining units are implemented in the form of the hardware circuit.

In this embodiment of this application, the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, the FPGA, implemented by a programmable logic device (programmable logic device, PLD). In the reconfigurable hardware circuit, a process in which the processor loads the configuration document to implement hardware circuit configuration may be understood as a process in which the processor loads the instructions to implement the functions of some or all of the units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that the units in the apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or the units in the apparatus may be independently implemented. In an implementation, the units may be integrated together and implemented in a form of a system-on-a-chip (system-on-a-chip, SOC). The SOC may include at least one processor, configured to implement any one of the foregoing methods or implement functions of the units of the apparatus. Types of the at least one processor may be different, for example, including a CPU and an FPGA, a CPU and an artificial intelligence processor, a CPU and a GPU, and the like.

FIG. 10 is a diagram of a structure of a processing device according to an embodiment of this application. As shown in FIG. 10, a processing device 50 includes a processor 501, a communication interface 502, a memory 503, and a bus 504. The processor 501, the memory 503, and the communication interface 502 communicate with each other through the bus 504. It should be understood that quantities of processors and memories in the processing device 50 are not limited in this application.

In an implementation, the processing device 50 is a component (for example, a chip or an integrated circuit) used for automated driving control on a vehicle. The vehicle is configured with an automated driving system. Herein, the automated driving system is not limited to a fully automated driving system, a highly automated driving system, a conditionally automated driving system, a partially automated driving system, or the like. A person skilled in the art may understand that all non-fully manual driving systems for intelligent driving may be covered within this concept.

In another implementation, the processing device 50 may be a network side device. The network side device is a device having a computing capability. The network side device may be, for example, a server deployed on a network side (for example, a server for intelligent driving processing), or a component or a chip in the server. In some possible embodiments, the network side device may also be a system-level device including a plurality of servers. The network side device may be deployed in a cloud environment or an edge environment. This is not specifically limited herein.

The bus 504 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 8. However, it does not mean that there is only one bus or only one type of bus. The bus 504 may include a path for transferring information between components (for example, the memory 503, the processor 501, and the communication interface 502) of the processing device 50.

For the processor 501, refer to the related descriptions of the processor in the foregoing embodiments. Details are not described again.

The memory 503 is configured to provide storage space, and the storage space may store data such as an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide an information input or output for the processor 501. Alternatively, the communication interface 502 may be configured to receive data sent from the outside and/or send data to the outside, and may be an interface of a wired link such as an Ethernet cable, or may be an interface of a wireless link (like Wi-Fi, Bluetooth, universal wireless transmission, or the like). Alternatively, the communication interface 502 may further include a transmitter (for example, a radio frequency transmitter or an antenna), a receiver, or the like coupled to the interface.

In some possible embodiments, the processing device 50 further includes a display 505. The display 505 and the processor 501 are connected or coupled through the bus 504. The display 505 may be configured to display a polygon instance of a first scene. The display 505 may be a display screen, and the display screen may be a liquid crystal display (liquid crystal display, LCD), an organic or inorganic light-emitting diode (organic light-emitting diode, OLED), an active-matrix organic light-emitting diode (active-matrix organic light-emitting diode, AMOLED), or the like. The display 505 may also be an in-vehicle infotainment tablet, an in-vehicle display, a head-up display (head-up display, HUD) system, an augmented reality head-up display AR-HUD system, or the like.

The processor 501 in the processing device 50 is configured to read the computer program stored in the memory 503, to perform the foregoing communication methods, for example, the method described in FIG. 4 or FIG. 7A.

In a possible design manner, the processing device 50 may be one or more modules in an execution body for performing the method shown in FIG. 4, and the processor 501 may be configured to read one or more computer programs stored in the memory, to perform the following operations:
obtaining, by using a receiving unit 310, collected data of a sensor for a first scene, where the sensor includes at least one of a camera and a radar; and
inputting the collected data into a perception detection network, and outputting perception information, where the perception information indicates a voxel of an obstacle in the first scene; and displaying the voxel of the obstacle based on at least the perception information.

In another possible design manner, the processing device 50 may be one or more modules in an execution body for performing the method shown in FIG. 7A, and the processor 501 may be configured to read one or more computer programs stored in the memory, to perform the following operations:
by an encoding unit 410, in each training process, performing feature extraction on image data at each moment in one batch of sensor data by using an image feature extraction network, to obtain 3D image features of image data at K moments, where K is a positive integer; and in each training process, performing feature extraction on point cloud data at each moment in the batch of sensor data by using a point cloud feature extraction network, to obtain point cloud features of voxels corresponding to point cloud data at K moments, and performing feature fusion, by using a feature fusion network, on the 3D image features of the image data at the K moments and the point cloud features of the voxels corresponding to the point cloud data at the K moments, to obtain fusion features of voxels of scenes at the K moments;
outputting, by a decoding unit 412, K prediction results based on the fusion features of the voxels of the scenes at the K moments by using each head network in an output network, where each of the K prediction results corresponds to a scene at one moment; and
by an updating unit 414, obtaining a loss value of each head network in the output network based on label information corresponding to the batch of sensor data and the K prediction results output by each head network in the output network, weighting the loss value of each head network in the output network, to obtain a loss value corresponding to each training process, and updating a parameter in a perception detection network by using the loss value.

In the foregoing embodiments in this specification, the descriptions of each embodiment have respective focuses. For a part that is not described in detail in an embodiment, refer to related descriptions in another embodiment. In addition, in embodiments of this application, if there is no special description or logic conflict, terms and/or descriptions in different embodiments are consistent and may be mutually referenced. Technical features in different embodiments may be combined to form a new embodiment based on an internal logical relationship between the technical features.

It should be noted that a person of ordinary skill in the art may see that, all or a part of the steps in each method of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, magnetic disk memory, magnetic tape memory, or any other computer-readable medium that can be configured to carry or store data.

The technical solutions of this application essentially, or the part contributing, or all or some of the technical solutions may be implemented in a form of a software product. A computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. An intelligent driving method, wherein the method comprises:
obtaining collected data of a sensor for a first scene, wherein the sensor comprises at least one of a camera and a radar;
inputting the collected data into a perception detection network, and outputting perception information, wherein the perception information indicates a voxel of an obstacle in the first scene; and
controlling driving of a vehicle based on at least the perception information.

2. The method according to claim 1, wherein the method further comprises:
displaying the obstacle based on the perception information, wherein the obstacle is marked by a polygon box; and/or
displaying the voxel of the obstacle based on the perception information.

3. The method according to claim 1 or 2, wherein the perception information comprises at least one of the following information:
an occupation status of a voxel of the first scene, speed information of the voxel of the first scene, a visibility status of the voxel of the first scene, and corner point information of the polygon box corresponding to the obstacle, wherein
the polygon box corresponding to the obstacle is associated with the voxel of the obstacle.

4. The method according to any one of claims 1 to 3, wherein the perception information further indicates a voxel of a road surface in the first scene, and the controlling driving of a vehicle based on at least the perception information comprises:
generating road surface geometry information of the first scene based on at least the perception information; and
adjusting a suspension in the vehicle based on the road surface geometry information.

5. The method according to any one of claims 1 to 4, wherein the controlling driving of a vehicle based on at least the perception information comprises: adjusting a driving path of the vehicle based on at least the perception information, wherein an adjusted driving path does not pass through an area in which the voxel of the obstacle is located.

6. The method according to any one of claims 1 to 5, wherein the collected data comprises image data and point cloud data, and the perception detection network comprises an image feature extraction network, a point cloud feature extraction network, a feature fusion network, and an output network, wherein
the image feature extraction network is configured to extract a 3D image feature of the image data;
the point cloud feature extraction network is configured to extract a point cloud feature of a voxel corresponding to the point cloud data;
the feature fusion network is configured to perform fusion based on the 3D image feature and the point cloud feature of the voxel corresponding to the point cloud data, to obtain a fusion feature of the voxel of the first scene; and
the output network is configured to process the fusion feature of the voxel of the first scene and output the perception information.

7. The method according to claim 6, wherein the method further comprises:
inputting text query information and a fusion feature of the voxel of the obstacle into an attribute recognition network, and outputting category information of the obstacle, wherein the text query information is used to request to query a category; and
displaying the category information of the obstacle, wherein
the fusion feature of the voxel of the obstacle is determined based on the corner point information of the polygon box corresponding to the obstacle and the fusion feature of the voxel of the first scene, and the polygon box corresponding to the obstacle is associated with the voxel of the obstacle.

8. The method according to claim 6 or 7, wherein the method further comprises:
obtaining a plurality of planned paths of the vehicle;
inputting the plurality of planned paths of the vehicle and the fusion feature of the voxel of the first scene into a path evaluation network, and outputting recommendation coefficients of the plurality of planned paths and a recommended path in the plurality of planned paths, wherein the recommended path is associated with the recommendation coefficients of the plurality of planned paths; and
displaying the recommended path.

9. A system for intelligent driving, wherein the system comprises:
a perception detection network, configured to output perception information based on collected data of a sensor for a first scene, wherein the perception information indicates a voxel of an obstacle in the first scene, and the sensor comprises at least one of a camera and a radar;
an attribute recognition network, configured to output category information of the obstacle based on text query information and a fusion feature of the voxel of the obstacle, wherein the fusion feature of the voxel of the obstacle is determined based on corner point information of a polygon box corresponding to the obstacle and a fusion feature of a voxel of the first scene, the polygon box corresponding to the obstacle is associated with the voxel of the obstacle, and the fusion feature of the voxel of the first scene is obtained by the perception detection network by performing temporal and/or spatial fusion based on at least one of a 3D image feature and a point cloud feature of a voxel that are extracted from the collected data; and
a path evaluation network, configured to output recommendation coefficients of a plurality of planned paths and a recommended path in the plurality of planned paths based on the plurality of planned paths and the fusion feature of the voxel of the first scene, wherein the recommended path is associated with the recommendation coefficients of the plurality of planned paths.

10. The system according to claim 9, wherein the perception information comprises at least one of the following information:
an occupation status of the voxel of the first scene, speed information of the voxel of the first scene, a visibility status of the voxel of the first scene, and the corner point information of the polygon box corresponding to the obstacle, wherein
the polygon box corresponding to the obstacle is associated with the voxel of the obstacle.

11. The system according to claim 9 or 10, wherein the collected data comprises image data and point cloud data, and the perception detection network comprises an image feature extraction network, a point cloud feature extraction network, a feature fusion network, and an output network, wherein
the image feature extraction network is configured to extract the 3D image feature of the image data;
the point cloud feature extraction network is configured to extract the point cloud feature of the voxel corresponding to the point cloud data;
the feature fusion network is configured to perform fusion based on the 3D image feature and the point cloud feature of the voxel corresponding to the point cloud data, to obtain the fusion feature of the voxel of the first scene; and
the output network is configured to process the fusion feature of the voxel of the first scene and output the perception information.

12. The system according to any one of claims 9 to 11, wherein the attribute recognition network comprises a text encoding network and an attribute decoding network, wherein
the text encoding network is configured to extract a word vector feature of the text query information; and
the attribute decoding network is configured to output the category information of the obstacle based on the word vector feature and the fusion feature of the voxel of the obstacle.

13. The system according to any one of claims 9 to 12, wherein the path evaluation network comprises a path encoding network, a feature interaction network, and an evaluation output network, wherein
the path encoding network is configured to extract a path feature of each of the plurality of planned paths;
the feature interaction network is configured to obtain a risk feature of each planned path based on the path feature of each planned path and the fusion feature of the voxel of the first scene; and
the evaluation output network is configured to output the recommendation coefficients of the plurality of planned paths and the recommended path in the plurality of planned paths based on the risk features of the plurality of planned paths.

14. An apparatus for intelligent driving, wherein the apparatus comprises:
a receiving unit, configured to obtain collected data of a sensor for a first scene, wherein the sensor comprises at least one of a camera and a radar; and
a processing unit, configured to input the collected data into a perception detection network, and output perception information, wherein the perception information indicates a voxel of an obstacle in the first scene, wherein
the processing unit is further configured to control driving of a vehicle based on at least the perception information.

15. A computing apparatus, wherein the computing apparatus comprises a memory and a processor, and the memory is configured to store program instructions; when the processor executes the program instructions in the memory, the computing apparatus performs the method according to any one of claims 1 to 8.

16. A vehicle, wherein the vehicle comprises the system according to any one of claims 9 to 13, or comprises the apparatus according to claim 14 or 15.

17. A computer-readable storage medium, wherein the computer-readable storage medium stores program instructions, and the program instructions are used to implement the method according to any one of claims 1 to 8.
